# EUROPEAN PATENT APPLICATION

(11) **EP 4 195 749 A1**
(43) Date of publication of application: **14.06.2023**
(21) Application number: 21860218.3
(22) Date of filing: 17.08.2021
(51) Int. Cl.: H04W 24/02

(54) **AIR INTERFACE DELAY DETERMINATION METHOD AND APPARATUS**

(30) Priority: 28.08.2020 CN 202010890128
(71) Applicant: Huawei Technologies Co., Ltd., Shenzhen, Guangdong 518129 (CN)
(72) Inventor: HUANG, Zhenglei, Shenzhen, Guangdong 518129 (CN); NI, Hui, Shenzhen, Guangdong 518129 (CN); LI, Yongcui, Shenzhen, Guangdong 518129 (CN); PAN, Qi, Shenzhen, Guangdong 518129 (CN)
(74) Representative: Gill Jennings & Every LLP
(86) International application number: PCT/CN2021/113111
(87) International publication number: WO 2022/042380

(57) **Abstract**

This application provides a method and an apparatus for determining an air interface latency and relates to the field of communications technologies. In the method, an access network device obtains an air interface latency of a downlink data packet and schedules the downlink data packet based on the air interface latency of the downlink data packet. The air interface latency of the downlink data packet is calculated based on a round-trip latency, and the round-trip latency is a latency from when a terminal sends an uplink data packet to when the terminal receives the downlink data packet corresponding to the uplink data packet. In the method, the access network device may schedule the downlink data packet based on the air interface latency of the downlink data packet, so as to precisely control a latency in uplink and downlink data transmission. This ensures that the uplink and downlink data transmission meets a round-trip latency requirement.

## Description

This application claims priority to Chinese Patent Application No. 202010890128.5, filed with the China National Intellectual Property Administration on August 28, 2020 and entitled "METHOD AND APPARATUS FOR DETERMINING AIR INTERFACE LATENCY", which is incorporated herein by reference in its entirety.

### TECHNICAL FIELD

This application relates to the field of communications technologies, and in particular, to a method and an apparatus for determining an air interface latency.

### BACKGROUND

The development of a communications technology further enhances experience in the new media industry, and a video service becomes a mainstream media form. Emerging multimedia services, such as a 4K/8K ultra-high-definition video, virtual reality (virtual reality, VR), and augmented reality (augment reality, AR), emerge. VR is a revolutionary technology that subverts content consumption and communications consumption. VR blocks sight of a user and brings senses of the user into an independent and novel virtual space, which provides the user with more immersive experience.

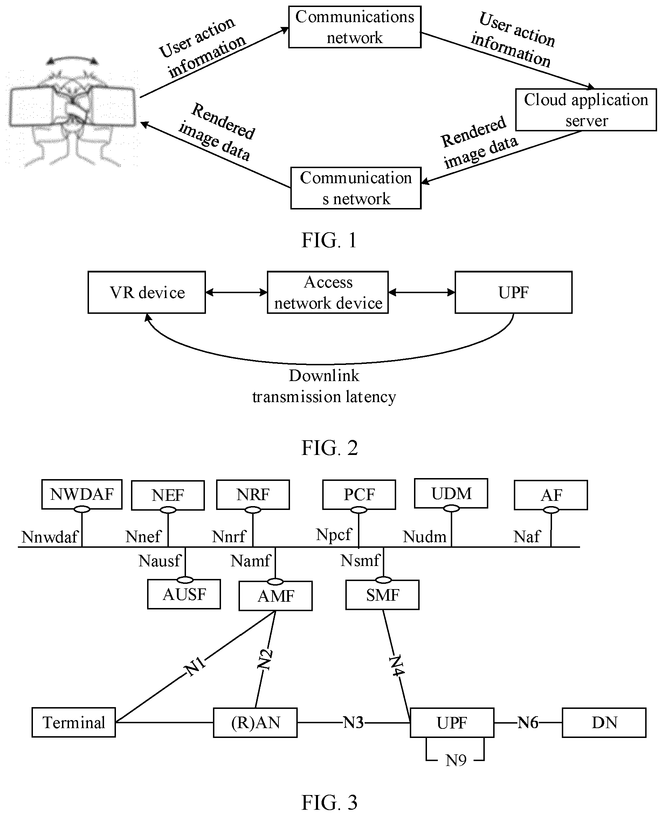

In VR application, referring to FIG. 1, a VR device (such as a VR helmet) captures action information, such as a head action, a hand action, or a squat/stand-up action, of a user and sends the action information to a cloud application server by using a communications network (such as a 5th generation (5th Generation, 5G) network). The cloud application server performs rendering based on the action information of the user to generate image data, and sends the image data to the VR device by using a communications network. Then, the user can view an image on the VR device.

A service requirement of a VR service is referred to as a motion-to-photon (motion-to-photon, MTP) latency. The MTP latency is a latency generated from when action information of a user is captured to when a VR device receives image data sent by a cloud server, a corresponding image is rendered by using an image engine, and the image is displayed on a screen of the VR device. Generally, the MTP latency must be less than 20 ms (ms). An excessively high MTP latency may cause dizziness to the user and affect VR service experience.

In order to effectively control the MTP latency, associated control needs to be performed on uplink and downlink data transmission of the VR service in a communications network, so as to ensure that the uplink and downlink data transmission meets an MTP latency requirement. During associated control of uplink and downlink data transmission in current times, referring to FIG. 2, a VR device adds, to an uplink data packet when sending the uplink data packet, a timestamp at which the uplink data packet is sent. After the uplink data packet is transmitted to a user plane function (user plane function, UPF) by using an access network device, the UPF calculates a downlink transmission latency in a 5G network based on an MTP latency, the timestamp added to the uplink data packet, and a moment at which a downlink data packet corresponding to the uplink data packet is received. In addition, the UPF determines a quality of service (quality of service, QoS) flow identifier (QoS flow identifier, QFI) that meets a requirement of the downlink transmission latency, and transmits the downlink data packet based on a QoS flow (QoS flow) corresponding to the QFI. This method cannot provide precise latency control, and a service requirement of a VR service may not be met in specific cases.

### SUMMARY

Embodiments of this application provide a method and an apparatus for determining an air interface latency, to precisely control a latency in uplink and downlink transmission and to meet a service requirement of a VR service.

According to a first aspect, a method for determining an air interface latency is provided, including the following steps: An access network device obtains an air interface latency of a downlink data packet, and schedules the downlink data packet based on the air interface latency of the downlink data packet. The air interface latency of the downlink data packet is calculated based on a round-trip latency, and the round-trip latency is a latency from when a terminal sends an uplink data packet to when the terminal receives the downlink data packet corresponding to the uplink data packet. According to the method provided in the first aspect, the access network device may schedule the downlink data packet based on the air interface latency of the downlink data packet, so as to precisely control the latency in uplink and downlink data transmission. This ensures that the uplink and downlink data transmission meets a round-trip latency requirement.

In a possible implementation, the round-trip latency includes a latency that is generated inside a cellular network and a latency that is generated outside the cellular network. That the access network device obtains the air interface latency of the downlink data packet includes the following steps: The access network device receives the uplink data packet sent by the terminal, where the uplink data packet carries a timestamp at which the terminal sends the uplink data packet. The access network device sends the uplink data packet to a user plane network element. The access network device receives, from the user plane network element, the downlink data packet corresponding to the uplink data packet. The access network device calculates the air interface latency of the downlink data packet based on the round-trip latency, a moment at which the access network device receives the downlink data packet, and a moment at which the terminal sends the uplink data packet, where the air interface latency of the downlink data packet is calculated based on an expression of D - (T2 - T1). D represents the round-trip latency, T1 represents the moment at which the terminal sends the uplink data packet, and T2 represents the moment at which the access network device receives the downlink data packet.

In a possible implementation, the round-trip latency includes a latency that is generated inside a cellular network. That the access network device obtains the air interface latency of the downlink data packet includes the following steps: The access network device receives the uplink data packet sent by the terminal, where the uplink data packet carries a timestamp at which the terminal sends the uplink data packet. The access network device sends the uplink data packet to a user plane network element. The access network device receives the downlink data packet corresponding to the uplink data packet, where the downlink data packet carries a first latency, and the first latency is a latency from when the user plane network element sends the uplink data packet to when the user plane network element receives the downlink data packet. The access network device calculates the air interface latency of the downlink data packet based on the first latency, the round-trip latency, a moment at which the access network device receives the downlink data packet, and a moment at which the terminal sends the uplink data packet, where the air interface latency of the downlink data packet is calculated based on an expression of D - (T2 - T1 - D1). D represents the round-trip latency, T1 represents the moment at which the terminal sends the uplink data packet, T2 represents the moment at which the access network device receives the downlink data packet, and D1 represents the first latency.

In a possible implementation, that the access network device obtains the air interface latency of the downlink data packet includes the following steps: The access network device receives, from a user plane network element, the downlink data packet corresponding to the uplink data packet, where the downlink data packet carries a second latency and a timestamp at which the user plane network element sends the downlink data packet. The second latency is a latency from when the user plane network element sends the downlink data packet to when the terminal receives the downlink data packet. The access network device calculates the air interface latency of the downlink data packet based on the second latency, a moment at which the access network device receives the downlink data packet, and a moment at which the user plane network element sends the downlink data packet, where the air interface latency of the downlink data packet is calculated based on an expression of D2 - (T2 - T1). D2 represents the second latency, T2 represents the moment at which the access network device receives the downlink data packet, and T1 represents the moment at which the user plane network element sends the downlink data packet.

In a possible implementation, that the access network device obtains the air interface latency of the downlink data packet includes the following step: The access network device receives, from a user plane network element, the air interface latency of the downlink data packet.

The foregoing possible implementations provide a plurality of methods for determining the air interface latency of the downlink data packet.

In a possible implementation, there are a plurality of downlink data packets, and a first downlink data packet in the downlink data packets carries a quantity of the downlink data packets. That the access network device schedules the downlink data packet based on the air interface latency of the downlink data packet includes the following step: The access network device allocates a latency for each of the downlink data packets based on the quantity of the downlink data packets and the air interface latency of the downlink data packet, and schedules each of the downlink data packets based on the allocated latency. In this possible implementation, one uplink data packet corresponds to a plurality of downlink data packets, and the determined air interface latency is allocated to the plurality of downlink data packets. In this way, transmission of the one uplink data packet and the plurality of downlink data packets corresponding to the uplink data packet meets an MTP latency requirement.

In a possible implementation, the uplink data packet carries a first identifier, and the method further includes the following step: If the downlink data packet carries the first identifier, the access network device determines that the downlink data packet corresponds to the uplink data packet. In this possible implementation, the access network device can determine the downlink data packet that corresponds to the uplink data packet.

In a possible implementation, the uplink data packet carries information about the round-trip latency, and the method further includes the following step: The access network device determines the round-trip latency based on the information that is about the round-trip latency and that is carried in the uplink data packet. In this possible implementation, the access network device can determine the round-trip latency.

According to a second aspect, a method for determining an air interface latency is provided, including the following step: A terminal sends an uplink data packet to an access network device. The uplink data packet carries information about a round-trip latency and a timestamp at which the terminal sends the uplink data packet. The round-trip latency is a latency from when the terminal sends the uplink data packet to when the terminal receives a downlink data packet corresponding to the uplink data packet. According to the method provided in the second aspect, another network element can determine the round-trip latency and the moment at which the terminal sends the uplink data packet.

In a possible implementation, the uplink data packet further carries a first identifier, and the first identifier is used to identify the uplink data packet and the downlink data packet that have a correspondence. In this possible implementation, another network element can determine the downlink data packet that corresponds to the uplink data packet.

According to a third aspect, a method for determining an air interface latency is provided, including the following steps: A user plane network element sends an uplink data packet. The user plane network element receives a downlink data packet corresponding to the uplink data packet. The user plane network element calculates a first latency based on a moment at which the user plane network element sends the uplink data packet and a moment at which the user plane network element receives the downlink data packet, where the first latency is calculated based on an expression of D1 = T4 - T3. D1 represents the first latency, T4 represents the moment at which the user plane network element receives the downlink data packet, and T3 represents the moment at which the user plane network element sends the uplink data packet. The user plane network element sends the downlink data packet, where the downlink data packet carries the first latency. According to the method provided in the third aspect, the user plane network element sends the determined first latency to the access network device. In this way, the access network device can determine an air interface latency of the downlink data packet.

In a possible implementation, the uplink data packet carries a first identifier, and the method further includes the following step: If the downlink data packet carries the first identifier, the user plane network element determines that the downlink data packet corresponds to the uplink data packet. In this possible implementation, the user plane network element can determine the downlink data packet that corresponds to the uplink data packet.

In a possible implementation, there are a plurality of downlink data packets, and a first downlink data packet in the downlink data packets carries a quantity of the downlink data packets. In this possible implementation, the access network device can determine the quantity of the downlink data packets.

According to a fourth aspect, a method for determining an air interface latency is provided, including the following steps: A user plane network element determines a second latency. The second latency is a latency from when the user plane network element sends a downlink data packet to when a terminal receives the downlink data packet. The second latency is calculated based on a round-trip latency, where the round-trip latency is a latency from when the terminal sends an uplink data packet to when the terminal receives the downlink data packet corresponding to the uplink data packet. The user plane network element sends the downlink data packet to an access network device, where the downlink data packet carries the second latency and a timestamp at which the user plane network element sends the downlink data packet. According to the method provided in the fourth aspect, the user plane network element sends the determined second latency to the access network device. In this way, the access network device can determine an air interface latency of the downlink data packet.

In a possible implementation, the round-trip latency includes a latency that is generated inside a cellular network and a latency that is generated outside the cellular network. That the user plane network element determines the second latency includes the following steps: The user plane network element receives the uplink data packet, where the uplink data packet carries a timestamp at which the terminal sends the uplink data packet. The user plane network element receives the downlink data packet. The user plane network element calculates the second latency based on the round-trip latency, a moment at which the user plane network element receives the downlink data packet, and a moment at which the terminal sends the uplink data packet, where the second latency is calculated based on an expression of D2 = D - (T1 - T3). D represents the round-trip latency, D2 represents the second latency, T1 represents the moment at which the user plane network element receives the downlink data packet, and T3 represents the moment at which the terminal sends the uplink data packet.

In a possible implementation, the round-trip latency includes a latency that is generated inside a cellular network. That the user plane network element determines the second latency includes the following steps: The user plane network element receives the uplink data packet, where the uplink data packet carries a timestamp at which the terminal sends the uplink data packet. The user plane network element sends the uplink data packet. The user plane network element calculates the second latency based on the round-trip latency, a moment at which the user plane network element sends the uplink data packet, and a moment at which the terminal sends the uplink data packet, where the second latency is calculated based on an expression of D2 = D - (T4 - T3). D represents the round-trip latency, D2 represents the second latency, T4 represents the moment at which the user plane network element sends the uplink data packet, and T3 represents the moment at which the terminal sends the uplink data packet.

In the foregoing two implementations, a plurality of methods for determining the second latency are provided.

In a possible implementation, the uplink data packet carries a first identifier, and the method further includes the following step: If the downlink data packet carries the first identifier, the user plane network element determines that the downlink data packet corresponds to the uplink data packet. In this possible implementation, the user plane network element can determine the downlink data packet that corresponds to the uplink data packet.

In a possible implementation, there are a plurality of downlink data packets, and a first downlink data packet in the downlink data packets carries a quantity of the downlink data packets. In this possible implementation, the access network device can determine the quantity of the downlink data packets.

In a possible implementation, the uplink data packet carries information about the round-trip latency, and the method further includes the following step: The user plane network element determines the round-trip latency based on the information that is about the round-trip latency and that is carried in the uplink data packet. In this possible implementation, the user plane network element can determine the round-trip latency.

According to a fifth aspect, a method for determining an air interface latency is provided, including the following steps: A user plane network element determines an air interface latency of a downlink data packet. The air interface latency of the downlink data packet is calculated based on a round-trip latency, where the round-trip latency is a latency from when a terminal sends an uplink data packet to when the terminal receives the downlink data packet corresponding to the uplink data packet. The user plane network element sends the air interface latency of the downlink data packet to an access network device. According to the method provided in the fifth aspect, the user plane network element sends the determined air interface latency of the downlink data packet to the access network device. In this way, the access network device can determine the air interface latency of the downlink data packet.

In a possible implementation, the round-trip latency includes a latency that is generated inside a cellular network and a latency that is generated outside the cellular network. That the user plane network element determines the air interface latency of the downlink data packet includes the following steps: The user plane network element receives the uplink data packet, where the uplink data packet carries a timestamp at which the terminal sends the uplink data packet. The user plane network element receives the downlink data packet. The user plane network element determines the air interface latency of the downlink data packet based on the round-trip latency, a moment at which the user plane network element receives the downlink data packet, a moment at which the terminal sends the uplink data packet, and a latency between the access network device and the user plane network element, where the air interface latency of the downlink data packet is determined based on an expression of D - (T4 - T3) - D3. D represents the round-trip latency, T4 represents the moment at which the user plane network element receives the downlink data packet, T3 represents the moment at which the terminal sends the uplink data packet, and D3 represents the latency between the access network device and the user plane network element.

In a possible implementation, the round-trip latency includes a latency that is generated inside a cellular network. That the user plane network element determines the air interface latency of the downlink data packet includes the following steps: The user plane network element receives the uplink data packet, where the uplink data packet carries a timestamp at which the terminal sends the uplink data packet. The user plane network element sends the uplink data packet. The user plane network element determines the air interface latency of the downlink data packet based on the round-trip latency, a moment at which the user plane network element sends the uplink data packet, a moment at which the terminal sends the uplink data packet, and a latency between the access network device and the user plane network element, where the air interface latency of the downlink data packet is determined based on an expression of D - (T4 - T3) - D3. D represents the round-trip latency, T4 represents the moment at which the user plane network element sends the uplink data packet, T3 represents the moment at which the terminal sends the uplink data packet, and D3 represents the latency between the access network device and the user plane network element.

The foregoing two possible implementations provide a plurality of methods for determining the air interface latency of the downlink data packet.

In a possible implementation, the uplink data packet carries a first identifier, and the method further includes the following step: If the downlink data packet carries the first identifier, the user plane network element determines that the downlink data packet corresponds to the uplink data packet. In this possible implementation, the user plane network element can determine the downlink data packet that corresponds to the uplink data packet.

In a possible implementation, there are a plurality of downlink data packets, and a first downlink data packet in the downlink data packets carries a quantity of the downlink data packets. In this possible implementation, the access network device can determine the quantity of the downlink data packets.

In a possible implementation, the uplink data packet carries information about the round-trip latency, and the method further includes the following step: The user plane network element determines the round-trip latency based on the information that is about the round-trip latency and that is carried in the uplink data packet. In this possible implementation, the user plane network element can determine the round-trip latency.

According to a sixth aspect, an apparatus for determining an air interface latency is provided, including a processing unit. The processing unit is configured to obtain an air interface latency of a downlink data packet, where the air interface latency of the downlink data packet is calculated based on a round-trip latency, and the round-trip latency is a latency from when a terminal sends an uplink data packet to when the terminal receives the downlink data packet corresponding to the uplink data packet.

In a possible implementation, the round-trip latency includes a latency that is generated inside a cellular network and a latency that is generated outside the cellular network. The apparatus for determining an air interface latency further includes a communications unit, and the processing unit is specifically configured to: receive, by using the communications unit, the uplink data packet sent by the terminal, where the uplink data packet carries a timestamp at which the terminal sends the uplink data packet; send the uplink data packet to a user plane network element by using the communications unit; receive, from the user plane network element, the downlink data packet corresponding to the uplink data packet by using the communications unit; and calculate the air interface latency of the downlink data packet based on the round-trip latency, a moment at which the apparatus for determining an air interface latency receives the downlink data packet, and a moment at which the terminal sends the uplink data packet, where the air interface latency of the downlink data packet is calculated based on an expression of D - (T2 - T1). D represents the round-trip latency, T1 represents the moment at which the terminal sends the uplink data packet, and T2 represents the moment at which the apparatus for determining an air interface latency receives the downlink data packet.

In a possible implementation, the round-trip latency includes a latency that is generated inside a cellular network. The apparatus for determining an air interface latency further includes a communications unit, and the processing unit is specifically configured to: receive, by using the communications unit, the uplink data packet sent by the terminal, where the uplink data packet carries a timestamp at which the terminal sends the uplink data packet; send the uplink data packet to a user plane network element by using the communications unit; receive the downlink data packet corresponding to the uplink data packet by using the communications unit, where the downlink data packet carries a first latency, and the first latency is a latency from when the user plane network element sends the uplink data packet to when the user plane network element receives the downlink data packet; and calculate the air interface latency of the downlink data packet based on the first latency, the round-trip latency, a moment at which the apparatus for determining an air interface latency receives the downlink data packet, and a moment at which the terminal sends the uplink data packet, where the air interface latency of the downlink data packet is calculated based on an expression of D - (T2 - T1 - D 1). D represents the round-trip latency, T1 represents the moment at which the terminal sends the uplink data packet, T2 represents the moment at which the apparatus for determining an air interface latency receives the downlink data packet, and D 1 represents the first latency.

In a possible implementation, the apparatus for determining an air interface latency further includes a communications unit, and the processing unit is specifically configured to: receive, from a user plane network element, the downlink data packet corresponding to the uplink data packet by using the communications unit, where the downlink data packet carries a second latency and a timestamp at which the user plane network element sends the downlink data packet, and the second latency is a latency from when the user plane network element sends the downlink data packet to when the terminal receives the downlink data packet; and calculate the air interface latency of the downlink data packet based on the second latency, a moment at which the apparatus for determining an air interface latency receives the downlink data packet, and a moment at which the user plane network element sends the downlink data packet, where the air interface latency of the downlink data packet is calculated based on an expression of D2 - (T2 - T1). D2 represents the second latency, T2 represents the moment at which the apparatus for determining an air interface latency receives the downlink data packet, and T1 represents the moment at which the user plane network element sends the downlink data packet.

In a possible implementation, the apparatus for determining an air interface latency further includes a communications unit, and the processing unit is specifically configured to: receive, from a user plane network element, the air interface latency of the downlink data packet by using the communications unit.

In a possible implementation, there are a plurality of downlink data packets, a first downlink data packet in the downlink data packets carries a quantity of the downlink data packets, and the processing unit is specifically configured to: allocate a latency for each of the downlink data packets based on the quantity of the downlink data packets and the air interface latency of the downlink data packet, and schedule each of the downlink data packets based on the allocated latency.

In a possible implementation, the uplink data packet carries a first identifier, and the processing unit is further configured to: If the downlink data packet carries the first identifier, determine that the downlink data packet corresponds to the uplink data packet.

In a possible implementation, the uplink data packet carries information about the round-trip latency, and the processing unit is further configured to: determine the round-trip latency based on the information that is about the round-trip latency and that is carried in the uplink data packet.

According to a seventh aspect, an apparatus for determining an air interface latency is provided, including a processing unit and a communications unit. The processing unit is configured to send an uplink data packet to an access network device by using the communications unit. The uplink data packet carries information about a round-trip latency and a timestamp at which the apparatus for determining an air interface latency sends the uplink data packet. The round-trip latency is a latency from when the apparatus for determining an air interface latency sends the uplink data packet to when the apparatus for determining an air interface latency receives a downlink data packet corresponding to the uplink data packet.

In a possible implementation, the uplink data packet further carries a first identifier, and the first identifier is used to identify the uplink data packet and the downlink data packet that have a correspondence.

According to an eighth aspect, an apparatus for determining an air interface latency is provided, including a processing unit and a communications unit. The communications unit is configured to send an uplink data packet. The communications unit is further configured to receive a downlink data packet corresponding to the uplink data packet. The processing unit is configured to calculate a first latency based on a moment at which the apparatus for determining an air interface latency sends the uplink data packet and the moment at which the apparatus for determining an air interface latency receives the downlink data packet, where the first latency is calculated based on an expression of D1 = T4 - T3. D1 represents the first latency, T4 represents the moment at which the apparatus for determining an air interface latency receives the downlink data packet, and T3 represents the moment at which the apparatus for determining an air interface latency sends the uplink data packet. The communications unit is further configured to send the downlink data packet, where the downlink data packet carries the first latency.

In a possible implementation, the uplink data packet carries a first identifier, and the processing unit is further configured to: If the downlink data packet carries the first identifier, determine that the downlink data packet corresponds to the uplink data packet.

In a possible implementation, there are a plurality of downlink data packets, and a first downlink data packet in the downlink data packets carries a quantity of the downlink data packets.

According to a ninth aspect, an apparatus for determining an air interface latency is provided, including a processing unit and a communications unit. The processing unit is configured to determine a second latency. The second latency is a latency from when the apparatus for determining an air interface latency sends a downlink data packet to when a terminal receives the downlink data packet. The second latency is calculated based on a round-trip latency. The round-trip latency is a latency from when the terminal sends an uplink data packet to when the terminal receives the downlink data packet corresponding to the uplink data packet. The communications unit is configured to send the downlink data packet to an access network device, where the downlink data packet carries the second latency and a timestamp at which the apparatus for determining an air interface latency sends the downlink data packet.

In a possible implementation, the round-trip latency includes a latency that is generated inside a cellular network and a latency that is generated outside the cellular network, and the processing unit is specifically configured to: receive the uplink data packet by using the communications unit, where the uplink data packet carries a timestamp at which the terminal sends the uplink data packet; receive the downlink data packet by using the communications unit; and calculate the second latency based on the round-trip latency, a moment at which the apparatus for determining an air interface latency receives the downlink data packet, and a moment at which the terminal sends the uplink data packet, where the second latency is calculated based on an expression of D2 = D - (T1 - T3). D represents the round-trip latency, D2 represents the second latency, T1 represents the moment at which the apparatus for determining an air interface latency receives the downlink data packet, and T3 represents the moment at which the terminal sends the uplink data packet.

In a possible implementation, the round-trip latency includes a latency that is generated inside a cellular network, and the processing unit is specifically configured to: receive the uplink data packet by using the communications unit, where the uplink data packet carries a timestamp at which the terminal sends the uplink data packet; send the uplink data packet by using the communications unit; and calculate the second latency based on the round-trip latency, a moment at which the apparatus for determining an air interface latency sends the uplink data packet, and a moment at which the terminal sends the uplink data packet, where the second latency is calculated based on an expression of D2 = D - (T4 - T3). D represents the round-trip latency, D2 represents the second latency, T4 represents the moment at which the apparatus for determining an air interface latency sends the uplink data packet, and T3 represents the moment at which the terminal sends the uplink data packet.

In a possible implementation, the uplink data packet carries a first identifier, and the processing unit is further configured to: If the downlink data packet carries the first identifier, determine that the downlink data packet corresponds to the uplink data packet.

In a possible implementation, there are a plurality of downlink data packets, and a first downlink data packet in the downlink data packets carries a quantity of the downlink data packets.

In a possible implementation, the uplink data packet carries information about the round-trip latency, and the processing unit is further configured to: determine the round-trip latency based on the information that is about the round-trip latency and that is carried in the uplink data packet.

According to a tenth aspect, an apparatus for determining an air interface latency is provided, including a processing unit and a communications unit. The processing unit is configured to determine an air interface latency of a downlink data packet. The air interface latency of the downlink data packet is calculated based on a round-trip latency. The round-trip latency is a latency from when a terminal sends an uplink data packet to when the terminal receives the downlink data packet corresponding to the uplink data packet. The communications unit is configured to send the air interface latency of the downlink data packet to an access network device.

In a possible implementation, the round-trip latency includes a latency that is generated inside a cellular network and a latency that is generated outside the cellular network, and the processing unit is specifically configured to: receive the uplink data packet by using the communications unit, where the uplink data packet carries a timestamp at which the terminal sends the uplink data packet; receive the downlink data packet by using the communications unit; and determine the air interface latency of the downlink data packet based on the round-trip latency, a moment at which the apparatus for determining an air interface latency receives the downlink data packet, a moment at which the terminal sends the uplink data packet, and a latency between the access network device and the apparatus for determining an air interface latency, where the air interface latency of the downlink data packet is determined based on an expression of D - (T4 - T3) - D3. D represents the round-trip latency, T4 represents the moment at which the apparatus for determining an air interface latency receives the downlink data packet, T3 represents the moment at which the terminal sends the uplink data packet, and D3 represents the latency between the access network device and the apparatus for determining an air interface latency.

In a possible implementation, the round-trip latency includes a latency that is generated inside a cellular network, and the processing unit is specifically configured to: receive the uplink data packet by using the communications unit, where the uplink data packet carries a timestamp at which the terminal sends the uplink data packet; send the uplink data packet by using the communications unit; and determine the air interface latency of the downlink data packet based on the round-trip latency, a moment at which the apparatus for determining an air interface latency sends the uplink data packet, a moment at which the terminal sends the uplink data packet, and a latency between the access network device and the apparatus for determining an air interface latency, where the air interface latency of the downlink data packet is determined based on an expression of D - (T4 - T3) - D3. D represents the round-trip latency, T4 represents the moment at which the apparatus for determining an air interface latency sends the uplink data packet, T3 represents the moment at which the terminal sends the uplink data packet, and D3 represents the latency between the access network device and the apparatus for determining an air interface latency.

In a possible implementation, the uplink data packet carries a first identifier, and the processing unit is further configured to: If the downlink data packet carries the first identifier, determine that the downlink data packet corresponds to the uplink data packet.

In a possible implementation, there are a plurality of downlink data packets, and a first downlink data packet in the downlink data packets carries a quantity of the downlink data packets.

In a possible implementation, the uplink data packet carries information about the round-trip latency, and the processing unit is further configured to: determine the round-trip latency based on the information that is about the round-trip latency and that is carried in the uplink data packet.

According to an eleventh aspect, an apparatus for determining an air interface latency is provided, including a transceiver and one or more processors. The transceiver and the one or more processors support the apparatus for determining an air interface latency in performing any method provided in any one of the first aspect to the fifth aspect.

According to a twelfth aspect, an apparatus (or a chip) for determining an air interface latency is provided, including a processor and an interface. The processor is coupled to a memory by using the interface. When the processor executes a computer program or a computer executable instruction in the memory, any method provided in any one of the first aspect to the fifth aspect is performed.

According to a thirteenth aspect, a computer-readable storage medium is provided, including a computer executable instruction. When the computer executable instruction runs on a computer, the computer is enabled to perform any method provided in any one of the first aspect to the fifth aspect.

According to a fourteenth aspect, a computer program product is provided, including a computer executable instruction. When the computer executable instruction runs on a computer, the computer is enabled to perform any method provided in any one of the first aspect to the fifth aspect.

According to a fifteenth aspect, a system for determining an air interface latency is provided, including the foregoing access network device, the foregoing user plane network element, and the foregoing terminal.

For technical effects brought by any implementation in the sixth aspect to the fifteenth aspect, refer to technical effects brought by corresponding implementations in the first aspect to the fifth aspect. Details are not described herein again.

It should be noted that the solutions in the foregoing aspects may be combined on the premise that the solutions are not contradictory.

### BRIEF DESCRIPTION OF DRAWINGS

FIG. 1 is a schematic diagram of communication between a VR device and a cloud application server;
FIG. 2 is a schematic diagram of a downlink transmission latency;
FIG. 3 is a schematic diagram of a network architecture;
FIG. 4 is a flowchart of a method for determining an air interface latency according to an embodiment of this application;
FIG. 5 is a schematic architectural diagram of a protocol stack according to an embodiment of this application;
FIG. 6 to FIG. 11 each are a flowchart for determining an air interface latency according to an embodiment of this application;
FIG. 12 to FIG. 14B are flowcharts of a method for determining an air interface latency according to embodiments of this application;
FIG. 15 is a schematic diagram of composition of an apparatus for determining an air interface latency according to an embodiment of this application;
FIG. 16 is a schematic structural diagram of hardware of an apparatus for determining an air interface latency according to an embodiment of this application; and
FIG. 17 is a schematic structural diagram of hardware of another apparatus for determining an air interface latency according to an embodiment of this application.

### DESCRIPTION OF EMBODIMENTS

In the description of this application, unless otherwise stated, "/" means "or". For example, AB may mean A or B. Aterm "and/or" in this specification describes only an association relationship between associated objects and indicates that three relationships may exist. For example, A and/or B may indicate the following three cases: Only A exists, both A and B exist, and only B exists. In the description of this application, unless otherwise stated, "at least one" means one or more, and "a plurality of" means two or more than two.

In addition, to clearly describe the technical solutions in embodiments of this application, terms such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference.

The technical solutions in embodiments of this application may be applied to a 4th generation (4th Generation, 4G) system, a system evolved based on the 4G system, a 5G system, and a system evolved based on the 5G system. The 4G system may also be referred to as an evolved packet system (evolved packet system, EPS). In the 4G system, a core network (core network, CN) may be referred to as an evolved packet core (evolved packet core, EPC), and an access network may be referred to as a long term evolution (long term evolution, LTE) system. In the 5G system, a core network may be referred to as a 5GC (5G core), and an access network may be referred to as a new radio (new radio, NR) system. For ease of description, this application is described in the following by using an example in which this application is applied to the 5G system. If this application is applied to the 4G system or another communications system, a network element in this application needs to be replaced by a network element that has a same or similar function in a corresponding communications system.

FIG. 3 is an example schematic diagram of a network architecture of a 5G system that uses a service-based interface. In this schematic diagram, the 5G system may include an authentication server function (authentication server function, AUSF) network element, an access and mobility management function (access and mobility management function, AMF) network element, a data network (data network, DN), a unified data management (unified data management, UDM) network element, a policy control function (policy control function, PCF) network element, a (radio) access network ((radio) access network, (R)AN) network element, a UPF network element, a terminal (terminal), an application function (application function, AF) network element, a session management function (session management function, SMF) network element, a network data analytics function (network data analytics function, NWDAF) network element, a network exposure function (network exposure function, NEF) network element, and a network repository function (network repository function, NRF) network element.

For ease of description, the (R)AN network element, AMF network element, SMF network element, UDM network element, UPF network element, PCF network element, and the like are represented as a RAN, an AMF, an SMF, a UDM, a UPF, a PCF, and the like in the following.

The 5G system consists of an access network and a core network. The access network is used to implement functions related to radio access, and mainly includes a RAN. The core network is used for network service control, data transmission, and the like. The core network includes a plurality of network elements and mainly includes the AMF, SMF, UPF, PCF, UDM, and the like.

Functions of some network elements in FIG. 3 are described in the following:
The PCF is responsible for providing a policy, such as a QoS policy, a slice selection policy, or the like, for the AMF or SMF.

The UDM is responsible for 3rd Generation Partnership Project (3rd generation partnership project, 3GPP) authentication, authentication and key agreement (authentication and key agreement, AKA) authentication credential processing, user identification processing, access authorization, registration/mobility management, subscription management, SMS message management, and the like.

The AF may be an application server of an operator or a third party. The AF provides a service mainly by interacting with a 3GPP core network, for example, to affect a data routing decision or a policy control function, or provide some third-party services for a network side.

The AMF is mainly responsible for signaling processing, such as terminal registration management, terminal connection management, terminal accessibility management, terminal access authorization and authentication, terminal security, terminal mobility management (for example, terminal location update, terminal registration with a network, and terminal handover), network slice (network slice) selection, SMF selection, terminal registration or deregistration, and the like.

The SMF is mainly responsible for all control plane functions related to terminal session management, such as UPF selection, control, and redirection, Internet protocol (internet protocol, IP) address allocation and management, session QoS management, obtaining of a policy and charging control (policy and charging control, PCC) policy from the PCF, establishment, modification, and release of a bearer or session, and the like.

The UPF serves as an anchor of a protocol data unit (protocol data unit, PDU) session connection, and is responsible for data packet filtering, data transmission/forwarding, rate control, charging information generation, user plane QoS processing, uplink transmission authentication, transmission level verification, downlink data packet buffering, downlink data notification triggering, and the like of a terminal. The UPF may also serve as a branching point of a multi-homed (multi-homed) PDU session. A transmission resource and a scheduling function that are used by the UPF to provide a service for the terminal are managed by the SMF.

The NRF is a network element that stores information such as a network element attribute, a network element status, and a network topology relationship. The NRF provides functions for network element discovery and management.

The NWDAF provides at least one of a data collection function and a data analysis function. The data collection function is used to collect related data from a network element, a third-party service server, a terminal, or a network management system. The data analysis function is used to perform analysis and training based on related input data, and provide a data analysis result for a network element, a third-party service server, a terminal, or a network management system. The analysis result may assist a network in selecting a quality of service parameter for a service, or assist a network in selecting a background traffic transmission policy.

The NEF exposes a service and a capability, such as a third party, edge computing, and an AF, provided by a 3GPP network function in a secure manner.

The RAN is a network that includes one or more access network devices (which may also be referred to as RAN nodes or network devices), and implements functions such as a radio physical layer function, resource scheduling and radio resource management, radio access control and mobility management, quality of service management, data compression and encryption, and the like. The access network device is connected to the UPF by using a user plane interface N3, to transmit data of the terminal. The access network device establishes a control-plane signaling connection to the AMF by using a control plane interface N2, to implement a function such as radio access bearer control.

The access network device may be a base station, a wireless fidelity (wireless fidelity, WiFi) access point (access point, AP), a worldwide interoperability for microwave access (worldwide interoperability for microwave access, WiMAX) site, or the like. There may be various forms of base stations, for example, a macro base station, a micro base station (which is also referred to as a small cell), a relay station, an access point, and the like. Specifically, the base station may be an AP in a wireless local area network (wireless local area network, WLAN), a base transceiver station (base transceiver station, BTS) in a global system for mobile communications (global system for mobile communications, GSM) or in code division multiple access (code division multiple access, CDMA), a NodeB (NodeB, NB) in wideband code division multiple access (wideband code division multiple access, WCDMA), an evolved NodeB (evolved node B, eNB or eNodeB) in LTE, a relay station or an access point, a vehicle-mounted device, a wearable device, a next generation NodeB (the next generation node B, gNB) in a future 5G system, a base station in a future evolved public land mobile network (public land mobile network, PLMN), or the like.

The terminal may be a wireless terminal or a wired terminal. The wireless terminal may refer to a device that provides a user with voice and/or data connectivity, a handheld device with a wireless connection function, or another processing device connected to a wireless modem. The terminal and the access network device communicate with each other by using an air interface technology (such as an NR technology or an LTE technology). Terminals may also communicate with each other by using an air interface technology (such as an NR technology or an LTE technology). The wireless terminal may communicate with one or more core network devices, such as an AMF and an SMF, by using an access network device. The wireless terminal may be a mobile terminal, for example, a mobile phone (or referred to as a "cellular" phone), a smartphone, a satellite wireless device, a wireless modem card, or a computer with a mobile terminal. For example, the computer with a mobile terminal may be a laptop, a portable, a pocket-sized, a handheld, a computer built-in, or an in-vehicle mobile apparatus that exchanges voice and/or data with the access network device. For example, the wireless terminal may be a device such as a personal communications service (personal communication service, PCS) phone, a cordless telephone set, a session initiation protocol (session initiation protocol, SIP) phone, a wireless local loop (wireless local loop, WLL) station, a personal digital assistant (personal digital assistant, PDA), VR glasses, AR glasses, a machine type communications terminal, an Internet of Things terminal device, or the like. In Internet of Vehicles communication, a communications device loaded on a vehicle is a terminal, and a roadside unit (road side unit, RSU) may also be used as a terminal. A communications device loaded on an unmanned aerial vehicle may also be considered as a terminal. The wireless terminal may also be referred to as user equipment (user equipment, UE), a terminal device, a subscriber unit (subscriber unit), a subscriber station (subscriber station), a mobile station (mobile station), a mobile console (mobile), a remote station (remote station), an access point (access point), an access terminal (access terminal), a user terminal (user terminal), a user agent (user agent), or the like.

The DN refers to an operator network that provides a data transmission service for a user. For example, the DN may be an Internet protocol multimedia service (IP multi-media service, IMS) or the Internet (Internet). The terminal accesses the DN by establishing a PDU session (PDU session) from the terminal to the access network device to the UPF to the DN.

It may be understood that, in addition to the functional network elements shown in FIG. 3, the network architecture of the 5G network may further include another functional network element, such as a unified data storage (unified data repository, UDR) network element or an unstructured data storage function (unstructured data storage function, UDSF) network element. In embodiments of this application, a network element may also be referred to as an entity, a device, or the like.

The methods provided in embodiments of this application may be applied to an AR service, a VR service, a mixed reality (mixed reality, MR) service, an extended reality (extended reality, XR) service, a tactile Internet (tactile internet) service, or the like.

An AR technology is a technology that cleverly integrates virtual information with the real world. A plurality of technical means such as multimedia, three-dimensional modeling, real-time tracking and registration, intelligent interaction, and sensing are widely used to simulate virtual information such as a text, an image, a three-dimensional model, music, and a video that are generated by a computer. Then, simulated information is applied to the real world, and the two types of information complement each other, to implement "augmentation" of the real world.

A VR technology is also referred to as a virtual reality technology. The VR technology integrates a computer, electronic information, and a simulation technology. A basic implementation of the VR technology is that the computer simulates a virtual environment to provide environment immersive experience for a user. VR services are classified into two types. A first type of VR service is a 360-degree panoramic video service in a scenario such as a live sports event, a concert, or a movie. This type of VR service uses multiple cameras to collect and merge videos so that the videos can be presented in panoramic mode and played as streaming media on a VR helmet. A second type of VR service uses computer graphics (computer graphics, CG) processing as a key technology and is also referred to as CG VR. This type of VR service uses a computer to generate a simulation environment, and immerses a user into the environment by using entity-behavior system simulation and interactive three-dimensional dynamic scenes that integrate information from multiple sources.

A virtual scene created by using an MR technology can enter a real life and help know a user. For example, the user can use a device to measure a scale and an orientation of an object in real life when seeing a scene in eyes. A biggest feature of the MR technology is that a virtual world and the real world can interact with each other.

An XR technology uses a computer technology and a wearable device to generate a human-computer interaction environment that combines the real world with a virtual world. The XR technology is proposed based on the AR, VR, and MR technologies. An XR service aims to provide interactive immersive experience by using a highspeed network and a technology such as 360-degree imaging.

The tactile Internet integrates state-of-the-art technologies, such as a 5G network, haptic sensing (Haptic sense), one or more of the AR, VR, and MR technologies, and the like. The tactile Internet is another evolution of Internet technologies and helps the Internet further evolve from a content transmission network to a skill transmission network. In addition, the tactile Internet provides a new human-computer interaction mode that allows real-time tactile perception in addition to visual and auditory perception. In this way, a user can interact with a virtual environment in a more natural manner. The tactile Internet defines a basic communications network with low latency, high reliability, high connection density, and high security. As one of the important application scenarios of the 5G system, the tactile Internet can be widely used in industry applications that require millisecond-level responses, such as industrial control, automated driving, smart grid, gaming, entertainment, health, and education. In addition, network functions can be extended from environment information monitoring to environment control.

To improve user experience, an AR service, a VR service, an MR service, an XR service, a tactile Internet service, or the like may need to meet an MTP latency requirement. A value of a transmission latency in a cellular network (such as a 5G network or a 4G network) mainly depends on a wireless transmission latency of an air interface. In the prior art, processing of an air interface latency by an access network device is not considered, and latency control is not precise enough. As a result, service requirements of these services may fail to be met in specific cases. In addition, these services may involve a scenario in which one uplink data packet corresponds to a plurality of downlink data packets. However, latency decomposition for the plurality of downlink data packets is not considered in the prior art.

In order to resolve an issue that latency control of uplink and downlink data transmission of a service, such as an AR service, a VR service, an MR service, an XR service, or a tactile Internet service, is not precise enough, and an issue of how to meet the MTP latency requirement in a scenario in which one uplink data packet corresponds to a plurality of downlink data packets, this application provides a method for determining an air interface latency. In this method, an access network device or a UPF determines the air interface latency, and the access network device controls transmission of a downlink data packet on an air interface. In this way, a latency in uplink and downlink data transmission can be precisely controlled. In a scenario in which one uplink data packet corresponds to a plurality of downlink data packets, the determined air interface latency is allocated to the plurality of downlink data packets. In this way, transmission of the one uplink data packet and the plurality of downlink data packets corresponding to the uplink data packet meets the MTP latency requirement.

In the following, an example in which a user plane network element is a UPF is used to describe the method for determining an air interface latency in this application. It may be understood that all UPFs in the following may be replaced by user plane network elements.

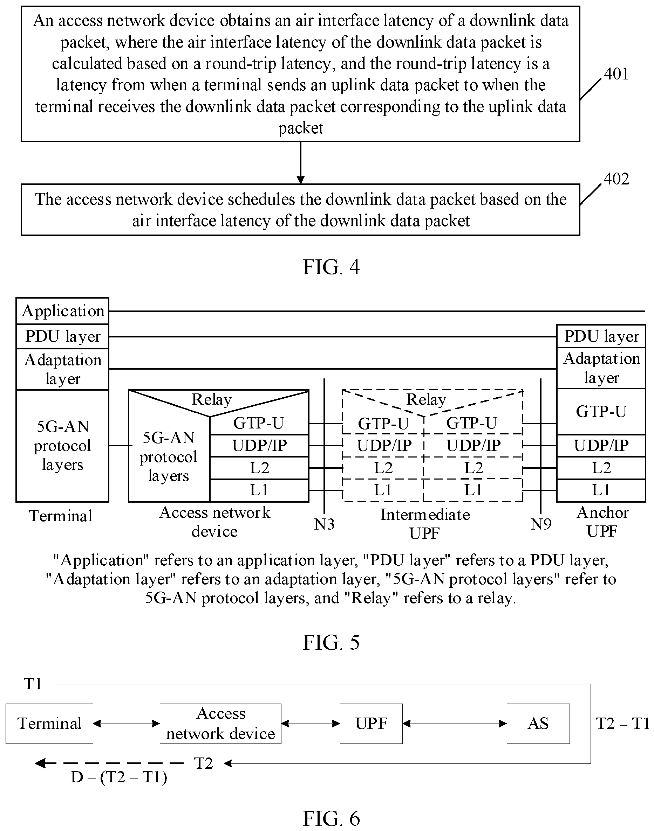

Referring to FIG. 4, the method for determining air interface latency in this application includes the following steps:
401: An access network device obtains an air interface latency of a downlink (downlink, DL) data packet. The air interface latency of the downlink data packet is calculated based on a round-trip latency. The round-trip latency is a latency from when a terminal sends an uplink (uplink, UL) data packet to when the terminal receives the downlink data packet corresponding to the uplink data packet.

The terminal may be a VR device (such as a VR helmet or VR glasses), an AR device (such as an AR helmet or AR glasses), an MR device, an XR device, a tactile Internet device, or the like.

The downlink data packet corresponding to the uplink data packet is a downlink data packet that is determined based on the uplink data packet. For example, the uplink data packet may include information about a user action captured by the terminal, and the downlink data packet corresponding to the uplink data packet may include image data that corresponds to the user action and that is rendered by an application server (application server, AS). An AS is a type of AF. For example, the AS may be a cloud AS. All downlink data packets in this application are downlink data packets corresponding to the uplink data packet in this application.

Optionally, the round-trip latency includes a latency that is generated inside a cellular network and a latency (such as an MTP latency) that is generated outside the cellular network. Alternatively, the round-trip latency includes a latency that is generated inside a cellular network. The round-trip latency may also be referred to as another name, such as an end-to-end (End-to-End, E2E) round-trip latency.

The latency that is generated inside the cellular network is a sum of a latency of the uplink data packet between the terminal and the UPF and a latency of the downlink data packet between the terminal and the UPF. The latency that is generated outside the cellular network is a latency from when the UPF sends the uplink data packet to when the UPF receives the downlink data packet. A latency includes a transmission latency between network nodes and a processing latency on the network nodes. For example, the latency that is generated outside the cellular network includes a transmission latency of the uplink data packet between the UPF and the AS, a processing latency on the AS, and a transmission latency of the downlink data packet between the UPF and the AS.

Optionally, the uplink data packet carries information about the round-trip latency. The round-trip latency may be carried in a radio resource control (radio resource control, RRC) header, a service data adaptation protocol (service data adaptation protocol, SDAP) header, or an adaptation layer (adaptation layer) header. The adaptation layer is an equivalent protocol layer that is newly added to the terminal and the UPF (for an architecture of a protocol stack between the terminal, the access network device, an intermediate UPF, and an anchor UPF in this case, refer to FIG. 5). It should be noted that all UPFs in this application are anchor UPFs.

If the round-trip latency is carried in the RRC header or the SDAP header, the access network device can obtain the round-trip latency because the access network device and the terminal have equivalent RRC or SDAP layers. In this case, if the UPF needs to obtain the round-trip latency, the access network device may send the round-trip latency to the UPF by adding the round-trip latency to a header (such as a general packet radio service (general packet radio service, GPRS) tunneling protocol user plane (GPRS tunnel protocol user plane, GTP-U) header, a user datagram protocol (user datagram protocol, UDP) header, or an IP header) of a protocol layer that is of the access network device and that is equivalent to a protocol layer of the UPF when the access network device sends the uplink data packet.

If the round-trip latency is carried in the adaptation layer header, the access network device cannot obtain the round-trip latency because the access network device does not have an adaptation layer equivalent to that of the terminal. However, the UPF can obtain the round-trip latency because the UPF has an adaptation layer equivalent to that of the terminal.

Optionally, the uplink data packet carries a first identifier (which may be recorded as an interaction ID), and the first identifier is used to identify the uplink data packet and the downlink data packet that have a correspondence. Specifically, after the AS receives the uplink data packet, the AS adds the first identifier of the uplink data packet to the downlink data packet corresponding to the uplink data packet when the AS sends the downlink data packet. In this way, another network element can determine, based on the first identifier, the downlink data packet that corresponds to the uplink data packet.

In this case, for the access network device, the method further includes the following step: If the downlink data packet carries the first identifier, the access network device determines that the downlink data packet corresponds to the uplink data packet. Before this step, the access network device receives the uplink data packet, where the uplink data packet carries the first identifier.

In this case, for the UPF, the method further includes the following step: If the downlink data packet carries the first identifier, the UPF determines that the downlink data packet corresponds to the uplink data packet. Before this step, the UPF receives the uplink data packet, where the uplink data packet carries the first identifier.

The first identifier may be carried in one or more of an application layer header, an SDAP header, or an adaptation layer header of the uplink data packet sent by the terminal. The first identifier in the application layer header is used by the AS to obtain the first identifier, the first identifier in the SDAP header is used by the access network device to obtain the first identifier, and the first identifier in the adaptation layer header is used by the UPF to obtain the first identifier. The GTP-U header of an uplink data packet sent by the access network device may carry the first identifier so that the UPF can obtain the first identifier. The IP header of an uplink data packet sent by the UPF may carry the first identifier so that the AS can obtain the first identifier. Similarly, the IP header and/or application layer header of a downlink data packet sent by the AS may carry the first identifier. The first identifier in the IP header is used by the UPF to determine the downlink data packet corresponding to the uplink data packet, and the first identifier in the application layer header is used by the terminal to determine the downlink data packet corresponding to the uplink data packet. The GTP-U header and/or adaptation layer header of a downlink data packet sent by the UPF may carry the first identifier. The first identifier in the GTP-U header is used by the access network device to determine the downlink data packet corresponding to the uplink data packet, and the first identifier in the adaptation layer header is used by the terminal to determine the downlink data packet corresponding to the uplink data packet. The SDAP header of a downlink data packet sent by the access network device may carry the first identifier, and the first identifier in the SDAP header is used by the terminal to determine the downlink data packet corresponding to the uplink data packet.

402: The access network device schedules the downlink data packet based on the air interface latency of the downlink data packet.

In specific implementation of Step 402, the access network device may determine, based on the air interface latency of the downlink data packet, how to send the downlink data packet. For example, if the air interface latency of the downlink data packet is relatively low, the access network device may preferentially send the downlink data packet. If the air interface latency of the downlink data packet is relatively high, the access network device may preferentially send another downlink data packet whose air interface latency is relatively low.

In the prior art, associated control of uplink and downlink data transmission can be performed only by a core network by adjusting a QoS parameter of a QoS flow, without considering how the access network device controls the air interface latency. As a result, a latency in the uplink and downlink data transmission cannot be precisely controlled. In the method provided in this embodiment of this application, the access network device may schedule the downlink data packet based on the air interface latency of the downlink data packet, so as to precisely control the latency in the uplink and downlink data transmission. This ensures that the uplink and downlink data transmission meets a round-trip latency requirement.

Specifically, Step 401 may be performed in any one of the following manners:

### Manner 1

Application scenario: The round-trip latency includes the latency that is generated inside the cellular network and the latency that is generated outside the cellular network.

In this manner, the following steps are included:
11: The terminal sends the uplink data packet to the access network device. Accordingly, the access network device receives the uplink data packet sent by the terminal.

The uplink data packet carries a timestamp at which the terminal sends the uplink data packet. The timestamp indicates a moment T1 at which the terminal sends the uplink data packet.

12: The access network device sends the uplink data packet to the UPF. Accordingly, the UPF receives the uplink data packet from the access network device, and sends the uplink data packet to the AS. The AS generates the downlink data packet corresponding to the uplink data packet, and sends the downlink data packet to the UPF.

13: The UPF sends the received downlink data packet to the access network device. Accordingly, the access network device receives, from the UPF, the downlink data packet corresponding to the uplink data packet.

14: The access network device calculates the air interface latency of the downlink data packet based on the round-trip latency D, a moment T2 at which the access network device receives the downlink data packet, and the moment T1 at which the terminal sends the uplink data packet. The air interface latency of the downlink data packet is calculated based on an expression of D - (T2 - T1).

In Manner 1, referring to FIG. 6, a latency "from the terminal to the access network device to the UPF to the AS to the UPF to the access network device" equals T2 - T1, and a latency "from the access network device to the terminal" equals D - (T2 - T1).

### Manner 2

Application scenario: The round-trip latency includes the latency that is generated inside the cellular network.

In this manner, the following steps are included:
21: The terminal sends the uplink data packet to the access network device. Accordingly, the access network device receives the uplink data packet sent by the terminal.

The uplink data packet carries a timestamp at which the terminal sends the uplink data packet. The timestamp indicates a moment T1 at which the terminal sends the uplink data packet.

22: The access network device sends the uplink data packet to the UPF. Accordingly, the UPF receives the uplink data packet from the access network device, and sends the uplink data packet to the AS. The AS generates the downlink data packet corresponding to the uplink data packet, and sends the downlink data packet to the UPF. The UPF receives the downlink data packet corresponding to the uplink data packet.

23: The UPF calculates a first latency D1 based on a moment T3 at which the UPF sends the uplink data packet and a moment T4 at which the UPF receives the downlink data packet. The first latency D1 is calculated based on an expression of D1 = T4 - T3.

The first latency is a latency from when the UPF sends the uplink data packet to when the UPF receives the downlink data packet. In other words, the first latency is the latency that is generated outside the cellular network.

24: The UPF sends the downlink data packet to the access network device, where the downlink data packet carries the first latency D1. Accordingly, the access network device receives the downlink data packet corresponding to the uplink data packet.

25: The access network device calculates the air interface latency of the downlink data packet based on the first latency D1, the round-trip latency D, a moment T2 at which the access network device receives the downlink data packet, and the moment T1 at which the terminal sends the uplink data packet. The air interface latency of the downlink data packet is calculated based on an expression of D - (T2 - T1 - D1).

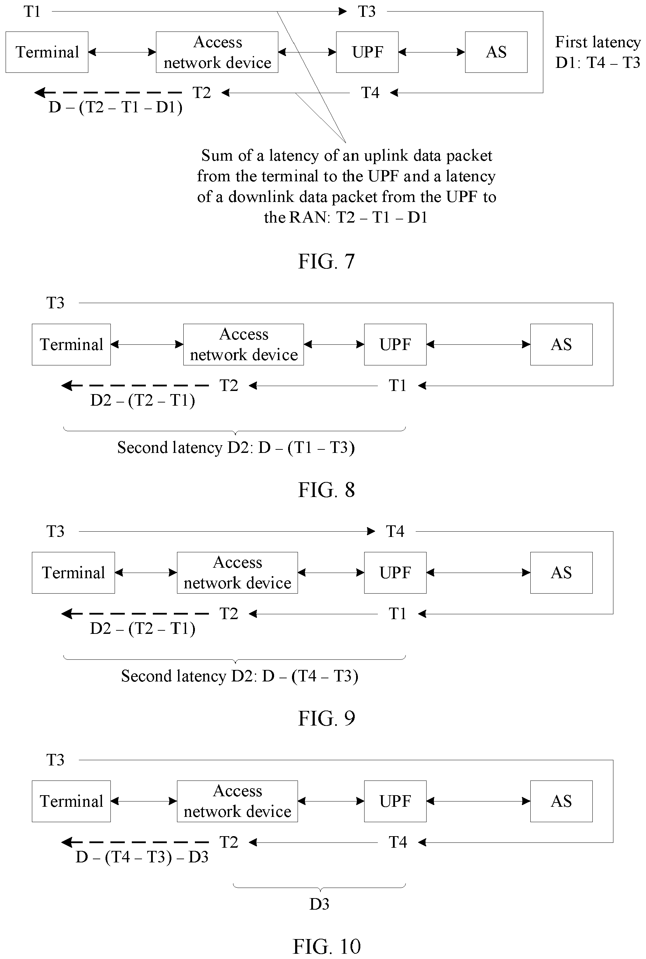

In Manner 2, referring to FIG. 7, a latency "from the UPF to the AS to the UPF" equals T4 - T3. That is, D 1 = T4 - T3. A latency "from the terminal to the access network device to the UPF to the AS to the UPF to the access network device" equals T2 - T1. Therefore, a sum of a latency "from the terminal to the access network device to the UPF" and a latency "from the UPF to the access network device" equals T2 - T1 - D 1. The round-trip latency includes the latency that is generated inside the cellular network. Therefore, a latency "from the access network device to the terminal" equals D - (T2 - T1 - D1).

In Manner 1 and Manner 2, the access network device determines the round-trip latency based on information that is about the round-trip latency and that is carried in the uplink data packet. Subsequently, the access network device may determine the air interface latency of the downlink data packet based on the determined round-trip latency.

### Manner 3

In this manner, the following steps are included:
31: The UPF determines a second latency D2. The second latency D2 is a latency from when the UPF sends the downlink data packet to when the terminal receives the downlink data packet, and the second latency D2 is calculated based on the round-trip latency.
32: The UPF sends the downlink data packet to the access network device. The downlink data packet carries the second latency D2 and a timestamp at which the UPF sends the downlink data packet. Accordingly, the access network device receives, from the UPF, the downlink data packet corresponding to the uplink data packet.

The timestamp at which the UPF sends the downlink data packet is used to indicate a moment T1 at which the UPF sends the downlink data packet. The access network device may determine T1 based on the timestamp.

33: The access network device calculates the air interface latency of the downlink data packet based on the second latency D2, a moment T2 at which the access network device receives the downlink data packet, and the moment T1 at which the UPF sends the downlink data packet. The air interface latency of the downlink data packet is calculated based on an expression of D2 - (T2 - T1).

If the round-trip latency includes the latency that is generated inside the cellular network and the latency that is generated outside the cellular network, Step 31 may include Steps A1 and A2 during specific implementation.

A1: The UPF receives the uplink data packet. The uplink data packet carries a timestamp at which the terminal sends the uplink data packet.

The timestamp at which the terminal sends the uplink data packet indicates a moment T3 at which the terminal sends the uplink data packet. Subsequently, the UPF sends the uplink data packet to the AS. The AS generates the downlink data packet corresponding to the uplink data packet, and sends the downlink data packet to the UPF. The UPF receives the downlink data packet corresponding to the uplink data packet.

A2: The UPF calculates the second latency D2 based on the round-trip latency D, a moment T1 at which the UPF receives the downlink data packet, and the moment T3 at which the terminal sends the uplink data packet. The second latency D2 is calculated based on an expression of D2 = D - (T1 - T3).

In this case, referring to FIG. 8, a latency "from the terminal to the access network device to the UPF to the AS to the UPF" equals T1 - T3, and a latency "from the UPF to the access network device to the terminal" equals D - (T1 - T3). A latency "from the UPF to the access network device" equals T2 - T1. Therefore, a latency "from the access network device to the terminal" equals D2 - (T2 - T1).

If the round-trip latency includes the latency that is generated inside the cellular network, Step 31 may include Steps B1 and B2 during specific implementation.

B1: The UPF receives the uplink data packet. The uplink data packet carries a timestamp at which the terminal sends the uplink data packet.

The timestamp at which the terminal sends the uplink data packet indicates a moment T3 at which the terminal sends the uplink data packet. Subsequently, the UPF sends the uplink data packet to the AS.

B2: The UPF calculates the second latency D2 based on the round-trip latency D, a moment T4 at which the UPF sends the uplink data packet, and the moment T3 at which the terminal sends the uplink data packet. The second latency D2 is calculated based on an expression of D2 = D - (T4 - T3).

In this case, referring to FIG. 9, a latency "from the terminal to the access network device to the UPF" equals T4 - T3. The round-trip latency includes the latency that is generated inside the cellular network. Therefore, the second latency D2 equals D - (T4 - T3). A latency "from the UPF to the access network device" equals T2 - T1. Therefore, a latency "from the access network device to the terminal" equals D2 - (T2 - T1).

### Manner 4

In this manner, the following steps are included:
41: The UPF determines the air interface latency of the downlink data packet. The air interface latency of the downlink data packet is calculated based on the round-trip latency.
42: The UPF sends the air interface latency of the downlink data packet to the access network device. Accordingly, the access network device receives, from the UPF, the air interface latency of the downlink data packet.

If the round-trip latency includes the latency that is generated inside the cellular network and the latency that is generated outside the cellular network, Step 41 may include Steps C1 and C2 during specific implementation.

C1: The UPF receives the uplink data packet. The uplink data packet carries a timestamp at which the terminal sends the uplink data packet.

The timestamp at which the terminal sends the uplink data packet indicates a moment T3 at which the terminal sends the uplink data packet. Subsequently, the UPF sends the uplink data packet to the AS. The AS generates the downlink data packet corresponding to the uplink data packet, and sends the downlink data packet to the UPF. The UPF receives the downlink data packet corresponding to the uplink data packet.

C2: The UPF calculates the air interface latency of the downlink data packet based on the round-trip latency D, a moment T4 at which the UPF receives the downlink data packet, the moment T3 at which the terminal sends the uplink data packet, and a latency D3 between the access network device and the UPF. The air interface latency of the downlink data packet is calculated based on an expression of D - (T4 - T3) - D3.

In this case, referring to FIG. 10, a latency "from the terminal to the access network device to the UPF to the AS to the UPF" equals T4 - T3, and a latency "from the UPF to the access network device to the terminal" equals D - (T4 - T3). A latency "from the UPF to the access network device" equals D3. Therefore, a latency "from the access network device to the terminal" equals D - (T4 - T3) - D3.

If the round-trip latency includes the latency that is generated inside the cellular network, Step 41 may include Steps E1 and E2 during specific implementation.

E1: The UPF receives the uplink data packet. The uplink data packet carries a timestamp at which the terminal sends the uplink data packet.

The timestamp at which the terminal sends the uplink data packet indicates a moment T3 at which the terminal sends the uplink data packet. Subsequently, the UPF sends the uplink data packet to the AS.

E2: The UPF calculates the air interface latency of the downlink data packet based on the round-trip latency D, a moment T4 at which the UPF sends the uplink data packet, the moment T3 at which the terminal sends the uplink data packet, and a latency D3 between the access network device and the UPF. The air interface latency of the downlink data packet is calculated based on an expression of D - (T4 - T3) - D3.

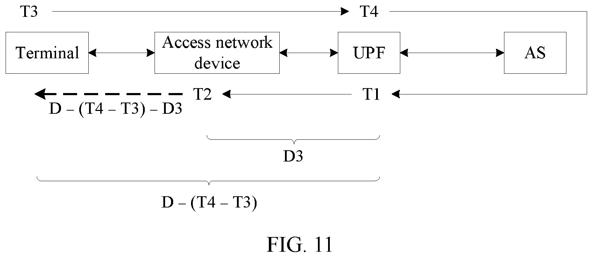

In this case, referring to FIG. 11, a latency "from the terminal to the access network device to the UPF" equals T4 - T3. The round-trip latency includes the latency that is generated inside the cellular network. Therefore, a latency "from the UPF to the access network device to the terminal" equals D - (T4 - T3). A latency "from the UPF to the access network device" equals D3. Therefore, a latency "from the access network device to the terminal" equals D - (T4 - T3) - D3.

In Manner 4, a value of the latency D3 between the access network device and the UPF may be preconfigured, may be notified by the SMF to the UPF, or may be determined in another manner. This is not limited in this application.

In Manner 3 and Manner 4, the UPF determines the round-trip latency based on information that is about the round-trip latency and that is carried in the uplink data packet. Subsequently, the UPF can determine the second latency or the air interface latency of the downlink data packet based on the determined round-trip latency.

Optionally, there are a plurality of downlink data packets, and a first downlink data packet in the downlink data packets carries a quantity of the downlink data packets. In this case, that the access network device schedules the downlink data packet based on the air interface latency of the downlink data packet includes the following step: The access network device allocates a latency for each of the downlink data packets based on the quantity of the downlink data packets and the air interface latency of the downlink data packet, and schedules each of the downlink data packets based on the allocated latency.

The access network device may allocate a same latency to each downlink data packet based on the air interface latency. For example, if the air interface latency is 20 ms and there are five downlink data packets, an air interface latency for each downlink data packet may be 4 ms. The access network device may allocate a same or different latency to each downlink data packet based on the air interface latency. For example, if the air interface latency is 20 ms and there are five downlink data packets, a latency of 3 ms is allocated to each of first three downlink data packets, a latency of 5 ms is allocated to a fourth downlink data packet, and a latency of 6 ms is allocated to a fifth downlink data packet.

In specific VR-based video streaming services, one uplink data packet may correspond to a plurality of downlink data packets. For example, in a VR game, the AS needs to perform rendering based on an action and a location that are fed back by the terminal so as to generate corresponding video data. The terminal needs to receive a complete group of consecutive image frames (group of pictures, GOP) before the GOP is decoded and played.

In this case, in an implementation, the AS may divide the GOP into a plurality of downlink data packets based on a downlink data packet division rule of a related protocol, and transmit the downlink data packets that are obtained after division by adding the quantity of the downlink data packets to the first downlink data packet in the downlink data packets. In another implementation, the AS may divide the GOP into a plurality of downlink data packets based on a downlink data packet division rule of a related protocol, and transmit the downlink data packets by adding GOP information (for example, the GOP information is carried in an IP header) to the first downlink data packet in the downlink data packets. After the UPF receives the first downlink data packet, the UPF determines a quantity of the downlink data packets based on the added GOP information and the downlink data packet division rule of the related protocol, and adds the quantity of the downlink data packets to the first downlink data packet when the UPF sends the first downlink data packet to the access network device.

In order to make the embodiment of this application clearer, the following uses Embodiments 1 to 3 as examples to describe the method provided in the foregoing embodiment of this application.

### Embodiment 1

Embodiment 1 is used as an example to describe an implementation procedure of Manner 1. In Embodiment 1, the round-trip latency includes the latency that is generated inside the cellular network and the latency that is generated outside the cellular network.

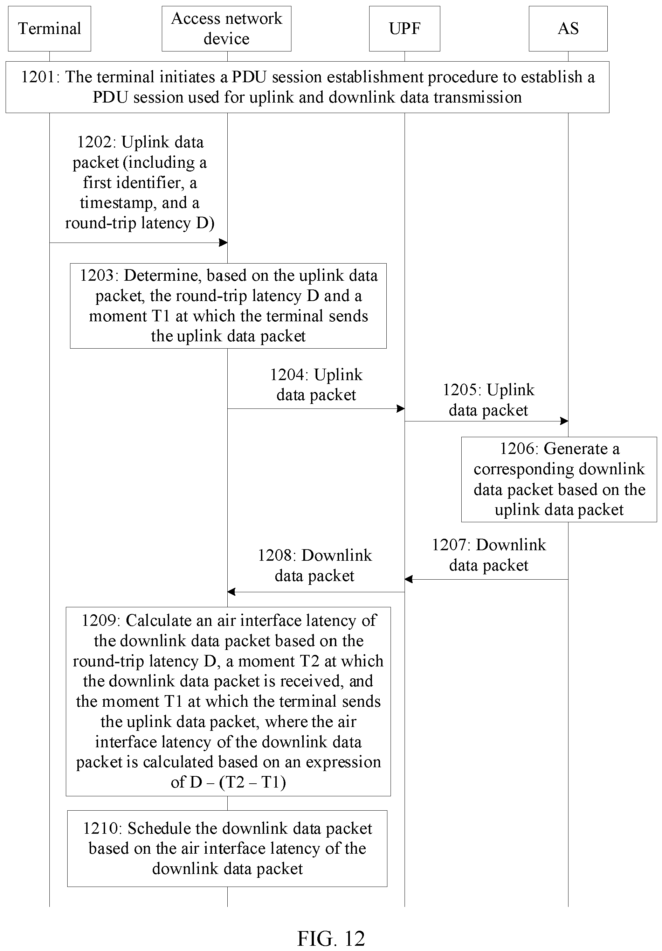

Referring to FIG. 12, the method provided in Embodiment 1 includes the following steps:
1201: The terminal initiates a PDU session establishment procedure to establish a PDU session used for uplink and downlink data transmission.
1202: The terminal sends the uplink data packet to the access network device. The uplink data packet carries a first identifier, a timestamp, and the round-trip latency D. Accordingly, the access network device receives the uplink data packet.

The timestamp indicates a moment T1 at which the terminal sends the uplink data packet.
1203: The access network device determines, based on the uplink data packet, the round-trip latency D and the moment T1 at which the terminal sends the uplink data packet.
1204: The access network device sends the uplink data packet to the UPF. Accordingly, the UPF receives the uplink data packet from the access network device.

A GTP-U header of the uplink data packet may carry the first identifier.

1205: The UPF sends the uplink data packet to the AS. Accordingly, the AS receives the uplink data packet from the UPF.

The UPF may send the uplink data packet to the AS over a network (such as the Internet or a fixed network) outside the cellular network. An IP header of the uplink data packet may carry the first identifier.

1206: The AS generates a corresponding downlink data packet based on the uplink data packet.

For example, the AS determines a user action based on the uplink data packet, and generates the corresponding downlink data packet based on the user action. The downlink data packet includes rendered image data.

1207: The AS sends the downlink data packet to the UPF. Accordingly, the UPF receives the downlink data packet from the AS.

The AS may send the downlink data packet to the UPF over a network outside the cellular network. An IP header of the downlink data packet may carry the first identifier.

1208: The UPF sends the downlink data packet to the access network device. Accordingly, the access network device receives the downlink data packet sent by the UPF.

Specifically, the UPF may parse the downlink data packet to obtain the first identifier, add the first identifier to a GTP-U header of the downlink data packet, and send the downlink data packet to the access network device. The access network device determines, based on the first identifier, that the downlink data packet corresponds to the uplink data packet.

1209: The access network device calculates the air interface latency of the downlink data packet based on the round-trip latency D, a moment T2 at which the access network device receives the downlink data packet, and the moment T1 at which the terminal sends the uplink data packet. The air interface latency of the downlink data packet is calculated based on an expression of D - (T2 - T1).

1210: The access network device schedules the downlink data packet based on the air interface latency of the downlink data packet.

Specifically, when the access network device schedules the downlink data packet, the access network device needs to ensure that a transmission latency of the downlink data packet on an air interface does not exceed D - (T2 - T1). If there are a plurality of downlink data packets, scheduling needs to be performed after a latency is allocated to each of the plurality of data packets.

### Embodiment 2

Embodiment 2 is used as an example to describe an implementation procedure of Manner 2. In this case, the round-trip latency includes the latency that is generated inside the cellular network. In this case, the UPF needs to determine the latency that is generated outside the cellular network and sends the latency to the access network device. In this way, the access network device can determine the air interface latency of a downlink data packet based on the latency.

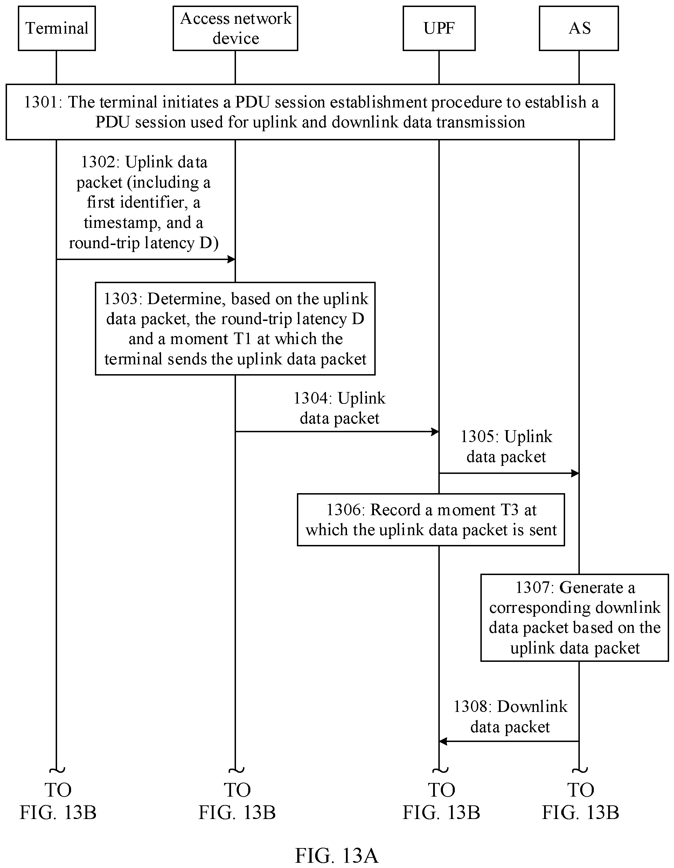

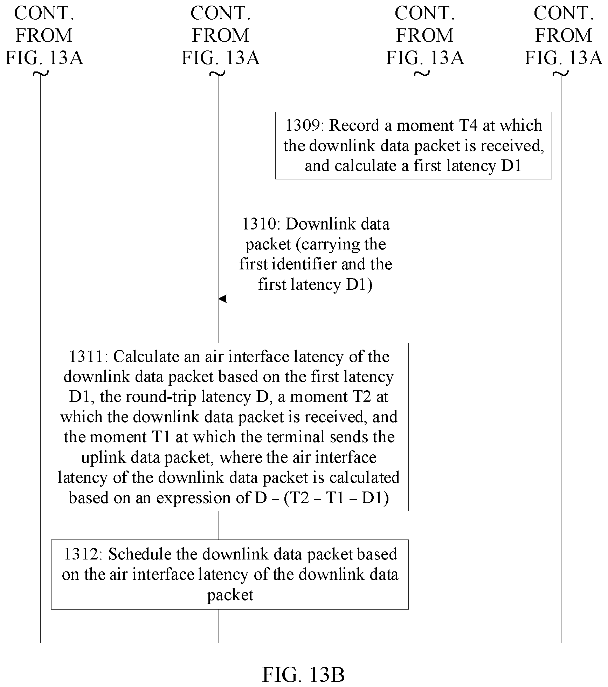

Referring to FIG. 13A and FIG. 13B, the method provided in Embodiment 2 includes the following steps:
Steps 1301 to 1305: These steps are the same as Steps 1201 to 1205.

1306: The UPF records a moment T3 at which the uplink data packet is sent.

Steps 1307 and 1308: These steps are the same as Steps 1206 and 1207.

1309: The UPF records a moment T4 at which the downlink data packet is received, and calculates a first latency D1.

Specifically, the UPF may obtain the first latency D1 based on T4 and T3 by using the following expression: D1 = T4 - T3.

1310: The UPF sends the downlink data packet to the access network device. Accordingly, the access network device receives the downlink data packet from the UPF.

The downlink data packet carries a first identifier and the first latency D1. Specifically, a GTP-U header of the downlink data packet carries the first identifier and the first latency D 1.

1311: The access network device calculates the air interface latency of the downlink data packet based on the first latency D1, the round-trip latency D, a moment T2 at which the access network device receives the downlink data packet, and the moment T1 at which the terminal sends the uplink data packet. The air interface latency of the downlink data packet is calculated based on an expression of D - (T2 - T1 - D1).

1312: This step is the same as Step 1210.

### Embodiment 3

Embodiment 3 is different from Embodiments 1 and 2 in the following aspect: The UPF determines the air interface latency of the downlink data packet or information that is used to determine the air interface latency of the downlink data packet, and sends the information to the access network device. The access network device schedules the downlink data packet based on the information sent by the UPF. In this embodiment, the method provided in the foregoing embodiments are described by using an example in which an adaptation layer header carries a first identifier, a timestamp, and a round-trip latency. In this case, the access network device does not need to know an association relationship between uplink and downlink data transmission. The access network device only needs to schedule the downlink data packet based on an instruction from the UPF.

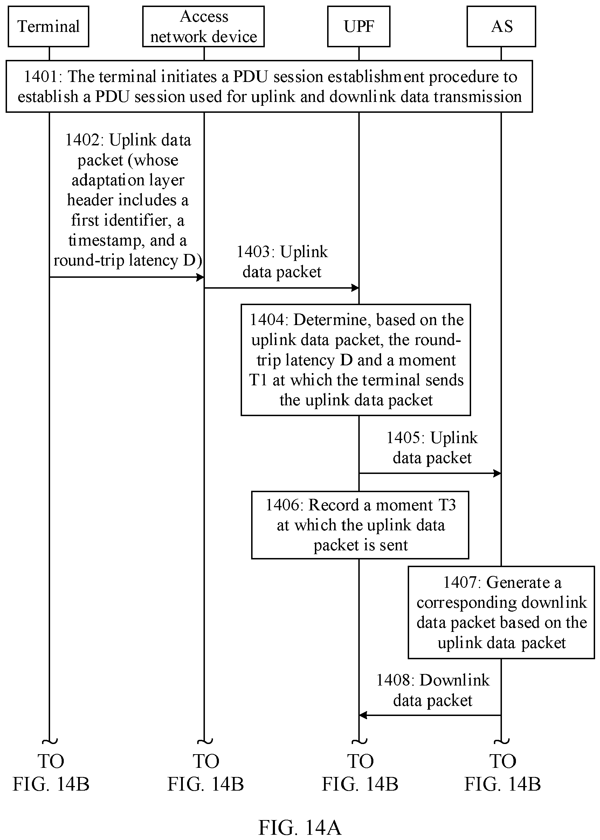

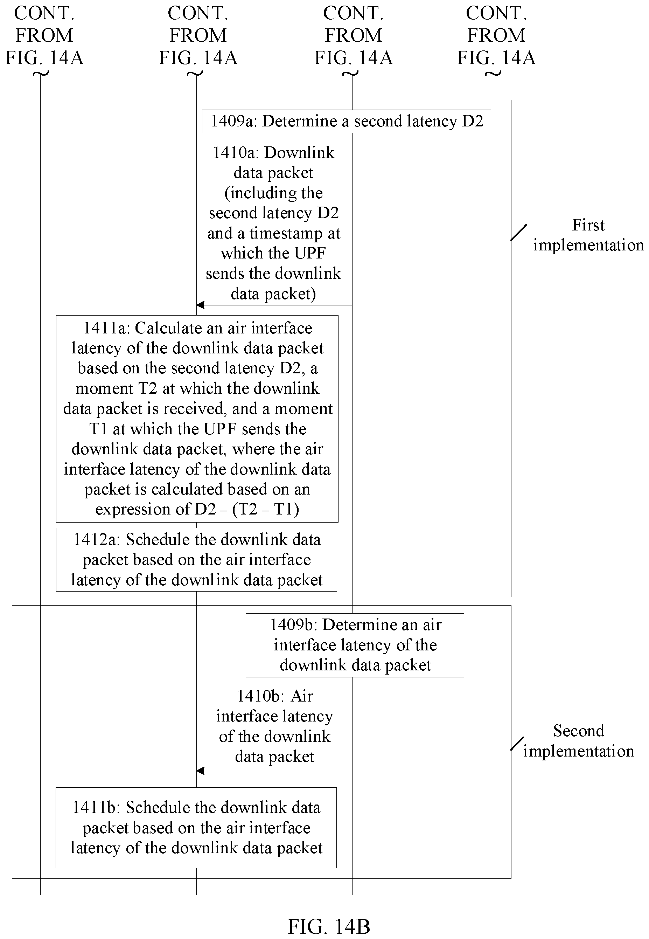

Referring to FIG. 14A and FIG. 14B, the method provided in Embodiment 3 includes the following steps:
1401: This step is the same as Step 1201.
1402: The terminal sends the uplink data packet to the access network device. An adaptation layer header of the uplink data packet carries the first identifier, the timestamp, and the round-trip latency D. Accordingly, the access network device receives the uplink data packet.

The timestamp indicates a moment T1 at which the terminal sends the uplink data packet.

1403: The access network device sends the uplink data packet to the UPF. Accordingly, the UPF receives the uplink data packet from the access network device.

1404: The UPF determines, based on the uplink data packet, the round-trip latency D and the moment T1 at which the terminal sends the uplink data packet.

1405: This step is the same as Step 1205.

1406: The UPF records a moment T3 at which the uplink data packet is sent.

Steps 1407 and 1408: These steps are the same as Steps 1206 and 1207.

In a first implementation, Steps 1409a to 1412a are performed after Step 1408. In a second implementation, Steps 1409b to 1411b are performed after Step 1408.

1409a: The UPF determines a second latency D2.

For specific implementation of Step 1409a, refer to the foregoing specific implementation of Step 31. Details are not described again.

1410a: The UPF sends the downlink data packet to the access network device. The downlink data packet carries the second latency D2 and a timestamp at which the UPF sends the downlink data packet. Accordingly, the access network device receives the downlink data packet from the UPF.

The timestamp at which the UPF sends the downlink data packet is used to indicate a moment T1 at which the UPF sends the downlink data packet.

1411a: The access network device calculates the air interface latency of the downlink data packet based on the second latency D2, a moment T2 at which the access network device receives the downlink data packet, and the moment T1 at which the UPF sends the downlink data packet. The air interface latency of the downlink data packet is calculated based on an expression of D2 - (T2 - T1).

1412a: This step is the same as Step 1210.

1409b: The UPF determines the air interface latency of the downlink data packet.

For specific implementation of Step 1409b, refer to the foregoing specific implementation of Step 41. Details are not described again.

1410b: The UPF sends the air interface latency of the downlink data packet to the access network device. Accordingly, the access network device receives, from the UPF, the air interface latency of the downlink data packet.

If there are a plurality of downlink data packets, the air interface latency of the downlink data packet may be carried in the first downlink data packet in the downlink data packets.

1411b: This step is the same as Step 1210.

In a latency calculation process in the foregoing embodiment, if a latency to be calculated includes a plurality of latency segments (a latency segment refers to a latency between two nodes), the latency to be calculated may be finally obtained by calculating a latency of each latency segment. For example, a latency "from the terminal to the access network device to the UPF to the AS to the UPF" may be obtained by calculating a latency "from the terminal to the access network device" and a latency "from the access network device to the UPF to the AS to the UPF".

In the foregoing embodiment, data packet processing time on the access network device and the UPF is very short. Therefore, a moment at which the UPF sends a data packet (an uplink data packet and/or a downlink data packet) may also be equivalent to a moment at which the UPF receives the data packet. This applies the other way around. Similarly, a moment at which the access network device sends a data packet (an uplink data packet and/or a downlink data packet) may also be equivalent to a moment at which the access network device receives the data packet. This applies the other way around.

In the foregoing embodiments, the terminal and the access network device may communicate with each other by using another device (such as a mobile phone, a tablet, or the like if the terminal is a VR device). The access network device and the UPF may also communicate with each other by using another device (such as an intermediate UPF).

The foregoing describes the solutions in embodiments of this application mainly from a perspective of interaction between network elements. It may be understood that, to implement the foregoing functions, each network element includes at least one of a corresponding hardware structure and software module for performing the functions. A person skilled in the art should be easily aware that units, algorithms, and steps in the examples described with reference to the embodiments disclosed in this specification can be implemented in a form of hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, the network elements may be divided into functional units based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that unit division in embodiments of this application is an example and is merely logical function division. During actual implementation, another division manner may be used.

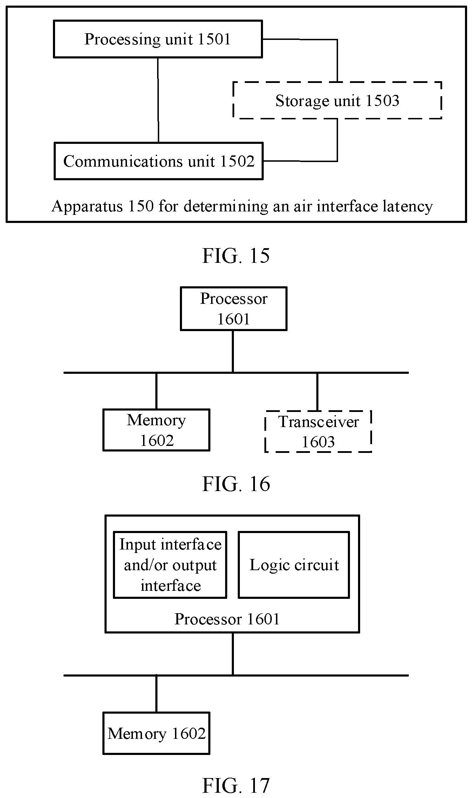

For example, FIG. 15 is a possible schematic structural diagram of an apparatus (which is denoted as an apparatus 150 for determining an air interface latency) for determining an air interface latency in the foregoing embodiments. The apparatus 150 for determining an air interface latency includes a processing unit 1501 and a communications unit 1502. Optionally, the apparatus 150 for determining an air interface latency further includes a storage unit 1503. The apparatus 150 for determining an air interface latency may be used to show structures of the access network device, the UPF, and the terminal in the foregoing embodiments.

If the schematic structural diagram in FIG. 15 is used to show a structure of the access network device involved in the foregoing embodiments, the processing unit 1501 is configured to manage an action of the access network device. For example, the processing unit 1501 is configured to perform Steps 401 and 402 in FIG. 4, Steps 1201 to 1204 and 1208 to 1210 in FIG. 12, Steps 1301 to 1304 and 1310 to 1312 in FIG. 13A and FIG. 13B, Steps 1401 to 1403, 1410a to 1412a, and 1410b and 1411b in FIG. 14A and FIG. 14B, and/or an action performed by the access network device in another process described in embodiments of this application. The processing unit 1501 may communicate with another network entity, such as the UPF in FIG. 12, by using the communications unit 1502. The storage unit 1503 is configured to store program code and data of the access network device.

If the schematic structural diagram in FIG. 15 is used to show a structure of the UPF involved in the foregoing embodiments, the processing unit 1501 is configured to manage an action of the UPF. For example, the processing unit 1501 is configured to perform Steps 1201, 1204, 1205, 1207, and 1208 in FIG. 12, Steps 1301, 1304 to 1306, and 1308 to 1310 in FIG. 13A and FIG. 13B, Steps 1401, 1403 to 1406, 1408, 1409a and 1410a, and 1409b and 1410b in FIG. 14A and FIG. 14B, and/or an action performed by the UPF in another process described in embodiments of this application. The processing unit 1501 may communicate with another network entity, such as the access network device in FIG. 12, by using the communications unit 1502. The storage unit 1503 is configured to store program code and data of the UPF.

If the schematic structural diagram in FIG. 15 is used to show a structure of the terminal involved in the foregoing embodiments, the processing unit 1501 is configured to manage an action of the terminal. For example, the processing unit 1501 is configured to perform Steps 1201 and 1202 in FIG. 12, Steps 1301 and 1302 in FIG. 13A and FIG. 13B, Steps 1401 and 1402 in FIG. 14A and FIG. 14B, and/or an action performed by the terminal in another process described in embodiments of this application. The processing unit 1501 may communicate with another network entity, such as the access network device in FIG. 12, by using the communications unit 1502. The storage unit 1503 is configured to store program code and data of the terminal.

For example, the apparatus 150 for determining an air interface latency may be a device, or may be a chip or a chip system. If the apparatus 150 for determining an air interface latency is a device, the processing unit 1501 may be a processor, and the communications unit 1502 may be a communications interface, a transceiver, or an input interface and/or an output interface. Optionally, the transceiver may be a transceiver circuit. Optionally, the input interface may be an input circuit, and the output interface may be an output circuit.

If the apparatus 150 for determining an air interface latency is a chip or a chip system, the communications unit 1502 may be a communications interface, an input interface and/or an output interface, an interface circuit, an output circuit, an input circuit, a pin, a related circuit, or the like on the chip or the chip system. The processing unit 1501 may be a processor, a processing circuit, a logic circuit, or the like.

If an integrated unit in FIG. 15 is implemented in a form of a software functional module and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes multiple instructions for instructing a computer device (which may be a personal computer, a server, or a network device) or a processor (processor) to perform all or some of the steps of the methods described in embodiments of this application. The storage medium that stores the computer software product includes any medium that can store program code, such as a USB flash drive, a removable hard disk, a read-only memory (read-only memory, ROM), a random access memory (random access memory, RAM), a magnetic disk, or an optical disc.

An embodiment of this application further provides a schematic structural diagram of hardware of an apparatus for determining an air interface latency. Referring to FIG. 16 or FIG. 17, the apparatus for determining an air interface latency includes a processor 1601. Optionally, the apparatus for determining an air interface latency may further include a memory 1602 connected to the processor 1601.

The processor 1601 may be a central processing unit (central processing unit, CPU), a microprocessor, an application-specific integrated circuit (application-specific integrated circuit, ASIC), or one or more integrated circuits configured to control program execution of the solutions in this application. The processor 1601 may alternatively include a plurality of CPUs, and the processor 1601 may be a single-core (single-CPU) processor or a multi-core (multi-CPU) processor. The processor herein may be one or more devices, circuits, or processing cores configured to process data (such as computer program instructions).

The memory 1602 may be a ROM or another type of static storage device that can store static information and instructions, a RAM or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. This embodiment of this application imposes no limitation thereon. The memory 1602 may exist independently (in this case, the processor may be located outside or inside the apparatus for determining an air interface latency), or may be integrated with the processor 1601. The memory 1602 may include computer program code. The processor 1601 is configured to execute the computer program code stored in the memory 1602, to implement the methods provided in embodiments of this application.

In a first possible implementation, referring to FIG. 16, the apparatus for determining an air interface latency further includes a transceiver 1603. The processor 1601, the memory 1602, and the transceiver 1603 are connected by a bus. The transceiver 1603 is configured to communicate with another device or a communications network. Optionally, the transceiver 1603 may include a transmitter and a receiver. A component configured to implement a receiving function in the transceiver 1603 may be considered as a receiver. The receiver is configured to perform a receiving step in embodiments of this application. A component configured to implement a sending function in the transceiver 1603 may be considered as a transmitter. The transmitter is configured to perform a sending step in embodiments of this application.

Based on the first possible implementation, the schematic structural diagram in FIG. 16 may be used to show structures of the access network device, the UPF, and the terminal that are involved in the foregoing embodiments.

If the schematic structural diagram in FIG. 16 is used to show a structure of the access network device involved in the foregoing embodiments, the processor 1601 is configured to manage an action of the access network device. For example, the processor 1601 is configured to perform Steps 401 and 402 in FIG. 4, Steps 1201 to 1204 and 1208 to 1210 in FIG. 12, Steps 1301 to 1304 and 1310 to 1312 in FIG. 13A and FIG. 13B, Steps 1401 to 1403, 1410a to 1412a, and 1410b and 1411b in FIG. 14A and FIG. 14B, and/or an action performed by the access network device in another process described in embodiments of this application. The processor 1601 may communicate with another network entity, such as the UPF in FIG. 12, by using the transceiver 1603. The memory 1602 is configured to store program code and data of the access network device.

If the schematic structural diagram in FIG. 16 is used to show a structure of the UPF involved in the foregoing embodiments, the processor 1601 is configured to manage an action of the UPF. For example, the processor 1601 is configured to perform Steps 1201, 1204, 1205, 1207, and 1208 in FIG. 12, Steps 1301, 1304 to 1306, and 1308 to 1310 in FIG. 13A and FIG. 13B, Steps 1401, 1403 to 1406, 1408, 1409a and 1410a, and 1409b and 1410b in FIG. 14A and FIG. 14B, and/or an action performed by the UPF in another process described in embodiments of this application. The processor 1601 may communicate with another network entity, such as the access network device in FIG. 12, by using the transceiver 1603. The memory 1602 is configured to store program code and data of the UPF.

If the schematic structural diagram in FIG. 16 is used to show a structure of the terminal involved in the foregoing embodiments, the processor 1601 is configured to manage an action of the terminal. For example, the processor 1601 is configured to perform Steps 1201 and 1202 in FIG. 12, Steps 1301 and 1302 in FIG. 13A and FIG. 13B, Steps 1401 and 1402 in FIG. 14A and FIG. 14B, and/or an action performed by the terminal in another process described in embodiments of this application. The processor 1601 may communicate with another network entity, such as the access network device in FIG. 12, by using the transceiver 1603. The memory 1602 is configured to store program code and data of the terminal.

In a second possible implementation, the processor 1601 includes a logic circuit, and an input interface and/or an output interface. For example, the output interface is configured to perform a sending action in a corresponding method, and the input interface is configured to perform a receiving action in a corresponding method.

Based on the second possible implementation, referring to FIG. 17, the schematic structural diagram in FIG. 17 may be used to show structures of the access network device, the UPF, and the terminal that are involved in the foregoing embodiments.

If the schematic structural diagram in FIG. 17 is used to show a structure of the access network device involved in the foregoing embodiments, the processor 1601 is configured to manage an action of the access network device. For example, the processor 1601 is configured to perform Steps 401 and 402 in FIG. 4, Steps 1201 to 1204 and 1208 to 1210 in FIG. 12, Steps 1301 to 1304 and 1310 to 1312 in FIG. 13A and FIG. 13B, Steps 1401 to 1403, 1410a to 1412a, and 1410b and 1411b in FIG. 14A and FIG. 14B, and/or an action performed by the access network device in another process described in embodiments of this application. The processor 1601 may communicate with another network entity, such as the UPF in FIG. 12, by using the input interface and/or the output interface. The memory 1602 is configured to store program code and data of the access network device.

If the schematic structural diagram in FIG. 17 is used to show a structure of the UPF involved in the foregoing embodiments, the processor 1601 is configured to manage an action of the UPF. For example, the processor 1601 is configured to perform Steps 1201, 1204, 1205, 1207, and 1208 in FIG. 12, Steps 1301, 1304 to 1306, and 1308 to 1310 in FIG. 13A and FIG. 13B, Steps 1401, 1403 to 1406, 1408, 1409a and 1410a, and 1409b and 1410b in FIG. 14A and FIG. 14B, and/or an action performed by the UPF in another process described in embodiments of this application. The processor 1601 may communicate with another network entity, such as the access network device in FIG. 12, by using the input interface and/or the output interface. The memory 1602 is configured to store program code and data of the UPF.

If the schematic structural diagram in FIG. 17 is used to show a structure of the terminal involved in the foregoing embodiments, the processor 1601 is configured to manage an action of the terminal. For example, the processor 1601 is configured to perform Steps 1201 and 1202 in FIG. 12, Steps 1301 and 1302 in FIG. 13A and FIG. 13B, Steps 1401 and 1402 in FIG. 14A and FIG. 14B, and/or an action performed by the terminal in another process described in embodiments of this application. The processor 1601 may communicate with another network entity, such as the access network device in FIG. 12, by using the input interface and/or the output interface. The memory 1602 is configured to store program code and data of the terminal.

In an implementation process, the steps in the methods provided in the embodiments may be completed by using a hardware integrated logic circuit in the processor, or by using instructions in a form of software. The steps of the methods disclosed with reference to embodiments of this application may be directly performed by a hardware processor, or may be performed by a combination of hardware and software modules in the processor.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a system for determining an air interface latency. The system for determining an air interface latency includes an access network device, a UPF, and a terminal.

An embodiment of this application further provides a chip. The chip includes a processor and an interface. The processor is coupled to a memory through the interface. When the processor executes a computer program or an instruction in the memory, any method provided in the foregoing embodiments is performed.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state drive, SSD)), or the like.

Although this application is described with reference to all the embodiments herein, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are set forth in dependent claims that are different from each other, but this does not mean that these measures cannot be combined to produce a great effect.

Although this application is described with reference to specific features and all the embodiments thereof, it is clear that various modifications and combinations may be made to them without departing from the spirit and scope of this application. Correspondingly, this specification and the accompanying drawings are merely example description of this application defined by the appended claims, and are considered as any or all of modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A method for determining an air interface latency, comprising:
obtaining, by an access network device, an air interface latency of a downlink data packet, wherein the air interface latency of the downlink data packet is calculated based on a round-trip latency, and the round-trip latency is a latency from when a terminal sends an uplink data packet to when the terminal receives the downlink data packet corresponding to the uplink data packet; and
scheduling, by the access network device, the downlink data packet based on the air interface latency of the downlink data packet.

2. The method according to claim 1, wherein the round-trip latency comprises a latency that is generated inside a cellular network and a latency that is generated outside the cellular network, and the obtaining, by an access network device, an air interface latency of a downlink data packet comprises:
receiving, by the access network device, the uplink data packet sent by the terminal, wherein the uplink data packet carries a timestamp at which the terminal sends the uplink data packet;
sending, by the access network device, the uplink data packet to a user plane network element;
receiving, by the access network device from the user plane network element, the downlink data packet corresponding to the uplink data packet; and
calculating, by the access network device, the air interface latency of the downlink data packet based on the round-trip latency, a moment at which the access network device receives the downlink data packet, and a moment at which the terminal sends the uplink data packet, wherein the air interface latency of the downlink data packet is calculated based on an expression of D - (T2 - T1), D represents the round-trip latency, T1 represents the moment at which the terminal sends the uplink data packet, and T2 represents the moment at which the access network device receives the downlink data packet.

3. The method according to claim 1, wherein the round-trip latency comprises a latency that is generated inside a cellular network, and the obtaining, by an access network device, an air interface latency of a downlink data packet comprises:
receiving, by the access network device, the uplink data packet sent by the terminal, wherein the uplink data packet carries a timestamp at which the terminal sends the uplink data packet;
sending, by the access network device, the uplink data packet to a user plane network element;
receiving, by the access network device, the downlink data packet corresponding to the uplink data packet, wherein the downlink data packet carries a first latency, and the first latency is a latency from when the user plane network element sends the uplink data packet to when the user plane network element receives the downlink data packet; and
calculating, by the access network device, the air interface latency of the downlink data packet based on the first latency, the round-trip latency, a moment at which the access network device receives the downlink data packet, and a moment at which the terminal sends the uplink data packet, wherein the air interface latency of the downlink data packet is calculated based on an expression of D - (T2 - T1 - D 1), D represents the round-trip latency, T1 represents the moment at which the terminal sends the uplink data packet, T2 represents the moment at which the access network device receives the downlink data packet, and D 1 represents the first latency.

4. The method according to claim 1, wherein the obtaining, by an access network device, an air interface latency of a downlink data packet comprises:
receiving, by the access network device from a user plane network element, the downlink data packet corresponding to the uplink data packet, wherein the downlink data packet carries a second latency and a timestamp at which the user plane network element sends the downlink data packet, and the second latency is a latency from when the user plane network element sends the downlink data packet to when the terminal receives the downlink data packet; and
calculating, by the access network device, the air interface latency of the downlink data packet based on the second latency, a moment at which the access network device receives the downlink data packet, and a moment at which the user plane network element sends the downlink data packet, wherein the air interface latency of the downlink data packet is calculated based on an expression of D2 - (T2 - T1), D2 represents the second latency, T2 represents the moment at which the access network device receives the downlink data packet, and T1 represents the moment at which the user plane network element sends the downlink data packet.

5. The method according to claim 1, wherein the obtaining, by an access network device, an air interface latency of a downlink data packet comprises:
receiving, by the access network device from a user plane network element, the air interface latency of the downlink data packet.

6. The method according to any one of claims 1 to 5, wherein there are a plurality of downlink data packets, a first downlink data packet in the downlink data packets carries a quantity of the downlink data packets, and the scheduling, by the access network device, the downlink data packet based on the air interface latency of the downlink data packet comprises:
allocating, by the access network device, a latency for each of the downlink data packets based on the quantity of the downlink data packets and the air interface latency of the downlink data packet, and scheduling each of the downlink data packets based on the allocated latency.

7. A method for determining an air interface latency, comprising:
sending, by a terminal, an uplink data packet to an access network device, wherein the uplink data packet carries information about a round-trip latency and a timestamp at which the terminal sends the uplink data packet, and the round-trip latency is a latency from when the terminal sends the uplink data packet to when the terminal receives a downlink data packet corresponding to the uplink data packet.

8. The method according to claim 7, wherein the uplink data packet further carries a first identifier, and the first identifier is used to identify the uplink data packet and the downlink data packet that have a correspondence.

9. A method for determining an air interface latency, comprising:
sending, by a user plane network element, an uplink data packet;
receiving, by the user plane network element, a downlink data packet corresponding to the uplink data packet;
calculating, by the user plane network element, a first latency based on a moment at which the user plane network element sends the uplink data packet and a moment at which the user plane network element receives the downlink data packet, wherein the first latency is calculated based on an expression of D1 = T4 - T3, D1 represents the first latency, T4 represents the moment at which the user plane network element receives the downlink data packet, and T3 represents the moment at which the user plane network element sends the uplink data packet; and
sending, by the user plane network element, the downlink data packet, wherein the downlink data packet carries the first latency.

10. The method according to claim 9, wherein there are a plurality of downlink data packets, and a first downlink data packet in the downlink data packets carries a quantity of the downlink data packets.

11. A method for determining an air interface latency, comprising:
determining, by a user plane network element, a second latency, wherein the second latency is a latency from when the user plane network element sends a downlink data packet to when a terminal receives the downlink data packet, and the second latency is calculated based on a round-trip latency, wherein the round-trip latency is a latency from when the terminal sends an uplink data packet to when the terminal receives the downlink data packet corresponding to the uplink data packet; and
sending, by the user plane network element, the downlink data packet to an access network device, wherein the downlink data packet carries the second latency and a timestamp at which the user plane network element sends the downlink data packet.

12. The method according to claim 11, wherein the round-trip latency comprises a latency that is generated inside a cellular network and a latency that is generated outside the cellular network, and the determining, by a user plane network element, a second latency comprises:
receiving, by the user plane network element, the uplink data packet, wherein the uplink data packet carries a timestamp at which the terminal sends the uplink data packet;
receiving, by the user plane network element, the downlink data packet; and
calculating, by the user plane network element, the second latency based on the round-trip latency, a moment at which the user plane network element receives the downlink data packet, and a moment at which the terminal sends the uplink data packet, wherein the second latency is calculated based on an expression of D2 = D - (T1 - T3), D represents the round-trip latency, D2 represents the second latency, T1 represents the moment at which the user plane network element receives the downlink data packet, and T3 represents the moment at which the terminal sends the uplink data packet.

13. The method according to claim 11, wherein the round-trip latency comprises a latency that is generated inside a cellular network, and the determining, by a user plane network element, a second latency comprises:
receiving, by the user plane network element, the uplink data packet, wherein the uplink data packet carries a timestamp at which the terminal sends the uplink data packet;
sending, by the user plane network element, the uplink data packet; and
calculating, by the user plane network element, the second latency based on the round-trip latency, a moment at which the user plane network element sends the uplink data packet, and a moment at which the terminal sends the uplink data packet, wherein the second latency is calculated based on an expression of D2 = D - (T4 - T3), D represents the round-trip latency, D2 represents the second latency, T4 represents the moment at which the user plane network element sends the uplink data packet, and T3 represents the moment at which the terminal sends the uplink data packet.

14. The method according to any one of claims 11 to 13, wherein there are a plurality of downlink data packets, and a first downlink data packet in the downlink data packets carries a quantity of the downlink data packets.

15. An apparatus for determining an air interface latency, comprising a processing unit, wherein
the processing unit is configured to obtain an air interface latency of a downlink data packet, wherein the air interface latency of the downlink data packet is calculated based on a round-trip latency, and the round-trip latency is a latency from when a terminal sends an uplink data packet to when the terminal receives the downlink data packet corresponding to the uplink data packet; and
the processing unit is further configured to schedule the downlink data packet based on the air interface latency of the downlink data packet.

16. The apparatus for determining an air interface latency according to claim 15, wherein the round-trip latency comprises a latency that is generated inside a cellular network and a latency that is generated outside the cellular network, the apparatus for determining an air interface latency further comprises a communications unit, and the processing unit is specifically configured to:
receive, by using the communications unit, the uplink data packet sent by the terminal, wherein the uplink data packet carries a timestamp at which the terminal sends the uplink data packet;
send the uplink data packet to a user plane network element by using the communications unit;
receive, from the user plane network element, the downlink data packet corresponding to the uplink data packet by using the communications unit; and
calculate the air interface latency of the downlink data packet based on the round-trip latency, a moment at which the apparatus for determining an air interface latency receives the downlink data packet, and a moment at which the terminal sends the uplink data packet, wherein the air interface latency of the downlink data packet is calculated based on an expression of D - (T2 - T1), D represents the round-trip latency, T1 represents the moment at which the terminal sends the uplink data packet, and T2 represents the moment at which the apparatus for determining an air interface latency receives the downlink data packet.

17. The apparatus for determining an air interface latency according to claim 15, wherein the round-trip latency comprises a latency that is generated inside a cellular network, the apparatus for determining an air interface latency further comprises a communications unit, and the processing unit is specifically configured to:
receive, by using the communications unit, the uplink data packet sent by the terminal, wherein the uplink data packet carries a timestamp at which the terminal sends the uplink data packet;
send the uplink data packet to a user plane network element by using the communications unit;
receive the downlink data packet corresponding to the uplink data packet by using the communications unit, wherein the downlink data packet carries a first latency, and the first latency is a latency from when the user plane network element sends the uplink data packet to when the user plane network element receives the downlink data packet; and
calculate the air interface latency of the downlink data packet based on the first latency, the round-trip latency, a moment at which the apparatus for determining an air interface latency receives the downlink data packet, and a moment at which the terminal sends the uplink data packet, wherein the air interface latency of the downlink data packet is calculated based on an expression of D - (T2 - T1 - D1), D represents the round-trip latency, T1 represents the moment at which the terminal sends the uplink data packet, T2 represents the moment at which the apparatus for determining an air interface latency receives the downlink data packet, and D1 represents the first latency.

18. The apparatus for determining an air interface latency according to claim 15, wherein the apparatus for determining an air interface latency further comprises a communications unit, and the processing unit is specifically configured to:
receive, from a user plane network element, the downlink data packet corresponding to the uplink data packet by using the communications unit, wherein the downlink data packet carries a second latency and a timestamp at which the user plane network element sends the downlink data packet, and the second latency is a latency from when the user plane network element sends the downlink data packet to when the terminal receives the downlink data packet; and
calculate the air interface latency of the downlink data packet based on the second latency, a moment at which the apparatus for determining an air interface latency receives the downlink data packet, and a moment at which the user plane network element sends the downlink data packet, wherein the air interface latency of the downlink data packet is calculated based on an expression of D2 - (T2 - T1), D2 represents the second latency, T2 represents the moment at which the apparatus for determining an air interface latency receives the downlink data packet, and T1 represents the moment at which the user plane network element sends the downlink data packet.

19. The apparatus for determining an air interface latency according to claim 15, wherein the apparatus for determining an air interface latency further comprises a communications unit, and the processing unit is specifically configured to:
receive, from a user plane network element, the air interface latency of the downlink data packet by using the communications unit.

20. The apparatus for determining an air interface latency according to any one of claims 15 to 19, wherein there are a plurality of downlink data packets, a first downlink data packet in the downlink data packets carries a quantity of the downlink data packets, and the processing unit is specifically configured to:
allocate a latency for each of the downlink data packets based on the quantity of the downlink data packets and the air interface latency of the downlink data packet, and schedule each of the downlink data packets based on the allocated latency.

21. An apparatus for determining an air interface latency, comprising a processing unit and a communications unit, wherein
the processing unit is configured to send an uplink data packet to an access network device by using the communications unit, wherein the uplink data packet carries information about a round-trip latency and a timestamp at which the apparatus for determining an air interface latency sends the uplink data packet, and the round-trip latency is a latency from when the apparatus for determining an air interface latency sends the uplink data packet to when the apparatus for determining an air interface latency receives a downlink data packet corresponding to the uplink data packet.

22. The apparatus for determining an air interface latency according to claim 21, wherein the uplink data packet further carries a first identifier, and the first identifier is used to identify the uplink data packet and the downlink data packet that have a correspondence.

23. An apparatus for determining an air interface latency, comprising a processing unit and a communications unit, wherein
the communications unit is configured to send an uplink data packet;
the communications unit is further configured to receive a downlink data packet corresponding to the uplink data packet;
the processing unit is configured to calculate a first latency based on a moment at which the apparatus for determining an air interface latency sends the uplink data packet and the moment at which the apparatus for determining an air interface latency receives the downlink data packet, wherein the first latency is calculated based on an expression of D1 = T4 - T3, D1 represents the first latency, T4 represents the moment at which the apparatus for determining an air interface latency receives the downlink data packet, and T3 represents the moment at which the apparatus for determining an air interface latency sends the uplink data packet; and
the communications unit is further configured to send the downlink data packet, wherein the downlink data packet carries the first latency.

24. The apparatus for determining an air interface latency according to claim 23, wherein there are a plurality of downlink data packets, and a first downlink data packet in the downlink data packets carries a quantity of the downlink data packets.

25. An apparatus for determining an air interface latency, comprising a processing unit and a communications unit, wherein
the processing unit is configured to determine a second latency, wherein the second latency is a latency from when the apparatus for determining an air interface latency sends a downlink data packet to when a terminal receives the downlink data packet, and the second latency is calculated based on a round-trip latency, wherein the round-trip latency is a latency from when the terminal sends an uplink data packet to when the terminal receives the downlink data packet corresponding to the uplink data packet; and
the communications unit is configured to send the downlink data packet to an access network device, wherein the downlink data packet carries the second latency and a timestamp at which the apparatus for determining an air interface latency sends the downlink data packet.

26. The apparatus for determining an air interface latency according to claim 25, wherein the round-trip latency comprises a latency that is generated inside a cellular network and a latency that is generated outside the cellular network, and the processing unit is specifically configured to:
receive the uplink data packet by using the communications unit, wherein the uplink data packet carries a timestamp at which the terminal sends the uplink data packet;
receive the downlink data packet by using the communications unit; and
calculate the second latency based on the round-trip latency, a moment at which the apparatus for determining an air interface latency receives the downlink data packet, and a moment at which the terminal sends the uplink data packet, wherein the second latency is calculated based on an expression of D2 = D - (T1 - T3), D represents the round-trip latency, D2 represents the second latency, T1 represents the moment at which the apparatus for determining an air interface latency receives the downlink data packet, and T3 represents the moment at which the terminal sends the uplink data packet.

27. The apparatus for determining an air interface latency according to claim 25, wherein the round-trip latency comprises a latency that is generated inside a cellular network, and the processing unit is specifically configured to:
receive the uplink data packet by using the communications unit, wherein the uplink data packet carries a timestamp at which the terminal sends the uplink data packet;
send the uplink data packet by using the communications unit; and
calculate the second latency based on the round-trip latency, a moment at which the apparatus for determining an air interface latency sends the uplink data packet, and a moment at which the terminal sends the uplink data packet, wherein the second latency is calculated based on an expression of D2 = D - (T4 - T3), D represents the round-trip latency, D2 represents the second latency, T4 represents the moment at which the apparatus for determining an air interface latency sends the uplink data packet, and T3 represents the moment at which the terminal sends the uplink data packet.

28. The apparatus for determining an air interface latency according to any one of claims 25 to 27, wherein there are a plurality of downlink data packets, and a first downlink data packet in the downlink data packets carries a quantity of the downlink data packets.

29. An apparatus for determining an air interface latency, wherein the apparatus for determining an air interface latency comprises a transceiver and one or more processors, and the transceiver and the one or more processors support the apparatus for determining an air interface latency in performing the method according to any one of claims 1 to 6, the method according to claim 7 or 8, the method according to claim 9 or 10, or the method according to any one of claims 11 to 14.

30. An apparatus for determining an air interface latency, wherein the apparatus for determining an air interface latency comprises a processor and an interface, the processor is coupled to a memory by using the interface, and when the processor executes a computer program or a computer executable instruction in the memory, the method according to any one of claims 1 to 6, the method according to claim 7 or 8, the method according to claim 9 or 10, or the method according to any one of claims 11 to 14 is performed.
